# NEUE EUROPÄISCHE PATENTSCHRIFT

(11) **EP 3 247 228 B2**
(45) Veröffentlichungstag und Bekanntmachung des Hinweises auf die Entscheidung über den Einspruch: **18.02.2026**
(45) Hinweis auf die Patenterteilung: 23.12.2020
(21) Anmeldenummer: 16701349.9
(22) Anmeldetag: 22.01.2016
(51) Int. Cl.: A23L 13/40, A23L 13/60, A23L 29/30

(54) **CELLOBIOSE IN FERMENTIERTEN FLEISCH- UND WURSTWAREN**
CELLOBIOSE IN FERMENTED MEAT PRODUCTS AND SAUSAGES
CELLOBIOSE DANS DES PRODUITS FERMENTÉS À BASE DE VIANDE ET DE CHARCUTERIE

(30) Priorität: 22.01.2015 EP 15152182
(43) Veröffentlichungstag der Anmeldung: 29.11.2017
(73) Patentinhaber: Pfeifer & Langen GmbH & Co. KG, 50858 Köln (DE); Van Hees GmbH, 65396 Walluf (DE)
(72) Erfinder: KOCH, Timo Johannes, 50189 Elsdorf (DE); LUDOVICI, Karl, 51465 Bergisch Gladbach (DE); KAUFMANN, Birgit, 40591 Düsseldorf (DE); KÖLBLIN, Alexander, 65366 Geisenheim (DE); STEPHAN, Alexander, 55270 Bubenheim (DE); JACOBS, Maritta, 50189 Elsdorf (DE)
(74) Vertreter: Kutzenberger Wolff & Partner
(86) Internationale Anmeldenummer: PCT/EP2016/051378
(87) Internationale Veröffentlichungsnummer: WO 2016/116622

(56) Entgegenhaltungen:
- EP-A2- 2 025 233
- JP-A- 2004 321 068
- JP-A- 2011 026 411
- US-A1- 2004 170 723
- US-A1- 2014 005 139
- US-B1- 6 287 610
- TALON ET AL.: "Fermented Meat Products and the Role of Starter Cultures", ENCYCLOPAEDIA OF FOOD MICROBIOLOGY, vol. 1, 2014, XP055848655
- AMADORO ET AL.: "Features of lactobacillus sakei isolated from italian saisages focus on strains from ventricina del vastese", ITALIAN JOURNAL OF FOOD SAFETY, vol. 4, 2015, pages 5449, XP055848681
- PARENTE ET AL.: "Phenotypic diversity of lactic acid bacteria isolated from fermented sausages produced in Basilicata (Southern Italy", JOURNAL OF APPLIED MICROBIOLOGY, vol. 90, 2001, pages 943 - 952, XP055848688
- BASHOLLI-SAHILU ET AL.: "Phenotypic and technological diversity of lactic acid bacteria and staphylococci isolated from traditionally fermented sausages in Southern Greece", FOOD AND NUTRITION SCIENCES, vol. 4, 2013, pages 1301 - 1306, XP005807866
- DROSINOS ET AL.: "Phenotypic and technological diversity of lactic acid bacteria and staphylococci isolated from traditionally fermented sausages in Southern Greece", FOOD MICROBIOLOGY, vol. 24, 2007, pages 260 - 270, XP005807866
- S.Ch. Parija, Textbook of Microbiology and Immunology, 3rd ed., Elsevier 2016, 44-48.e
- J. Martinussen et al., Current Opinion in Biotechnology 2013, 24:124-129
- Bundesamt für Verbraucherschutz undLebensnittelsicherheit, Az. 6790-0501-60,"Stellungnahme der ZKBS zu zwei Stämmen vonLactococcus lactis, MC010 und LR2" vom 2. Juli 2002
- Anzeige "L. Lactis Probiotic Powder, 50 g -Custom Probiotics", heruntergeladen am 28. Juli 2023
- Artikel "Lactococcus lactis" aus "Chemie-Schule”; heruntergeladen am 28. Juli 2023
- NCBI Taxonomy browser, Eintrag fur "L. lactis"
- NCBI Taxonomy browser, Eintrag fur "Lactococcuslactis"
- NCBI Taxonomy browser, Eintrag für "Lactobacilluslactis"
- B. Ray et al.. Fundamental Food Microbiology, CRCPress, 5. Auflage, 2014, Seiten 13-14
- L. De Vuyst et al., "Bacteriocins 01 Lactic AcidBacteria - Microbiology, Genetics andApplications", Springer, 1. Auflage, 1994,Seiten 27-29
- lpsn - List of Procaryotic names wlth Standing InNomenclature, Species Lactobacillus lactis,https://1psn.dsmz.de/species/lactobacillus-lactis, abgerufen am 5. Februar 2024
- DURCH FDHRUNGSVERORDNUNG (EU) 2023/94 3 DERKOMISSION vom 11. Mai 2023 zur Genehmigung desInverkehrbringens von Cellobiose als neuartigesLebensmittel und zur Änderung derDurchführungsverordnung (EU) 2017/2470
- Exzerpt aus Wikipedia für Lactococcus lactis
- YASUKO KATO ET AL: "Maillard reaction of disaccharides with protein: suppressive effect of nonreducing end pyranoside groups on browning and protein polymerization", JOURNAL OF AGRICULTURAL AND FOOD CHEMISTRY, vol. 37, no. 4, 31 July 1989 (1989-07-31), US, pages 1077 - 1081, XP055269523, ISSN: 0021-8561, DOI: 10.1021/jf00088a057
- J. C. ACTON ET AL: "UTILIZATION OF VARIOUS CARBOHYDRATES IN FERMENTED SAUSAGE", JOURNAL OF FOOD SCIENCE, vol. 42, no. 1, 31 January 1977 (1977-01-31), US, pages 174 - 178, XP055276258, ISSN: 0022-1147, DOI: 10.1111/j.1365-2621.1977.tb01245.x

## Beschreibung

Die Erfindung betrifft eine Lebensmittelzubereitung, welche (i) Teile von geschlachteten oder erlegten warmblütigen Tieren, welche zum Verzehr durch den Menschen bestimmt sind, sowie (ii) Cellobiose umfasst, wobei die Lebensmittelzubereitung durch Mikroorganismen, welche Cellobiose verstoffwechseln, fermentiert oder vorfermentiert wurde, wobei der Gehalt an Fett mindestens 5,0 Gew.-% beträgt, bezogen auf das Gesamtgewicht der Lebensmittelzubereitung; und wobei die Lebensmittelzubereitung weder Cellotriose, noch Cellotetraose, noch Cellopentaose, noch Cellohexaose enthält; wobei die Fermentation durch einen Mikroorganismus erfolgt ausgewählt aus
- Bakterien ausgewählt aus der Gruppe bestehend aus *Lactobacillus sakei Lactobacillus plantarum. Lactobacillus curvatis, Lactobacillus curvatus, Lactobacillus bavaricus, Lactobacillus rhamnosus, Lactobacillus pentosus, Lactococcus lactis. Pediococcus acidilactici. Pediococcus pendosaccus. Pediococcus cerevisiae. Pediococcus pentosaceus. Kocuria varians, Staphylococcus camosus, Staphylococcus xylosus, Staphylococcus equorum, Staphylococcus succinus,* und *Staphylococcus saprophyticus;*
- Hefen ausgewählt aus der Gruppe bestehend aus *Debaryomyces hansenii, Candida utilis,* und *Candida zeylanoides;* und
- Schimmelpilzen ausgewählt aus der Gruppe bestehend *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantioqriseum, Penicillium commune,* und *Penicillium rubrum..*

Kohlenhydrate finden traditionell breite Anwendung in Lebensmittelzubereitungen, welche tierische Bestandteile enthalten, wie beispielsweise Fleisch, Wurstwaren, Produkte mit Innereien, etc. In solchen Lebensmittelzubereitungen haben die Kohlenhydrate spezifische Funktionen. Diese können u.a. sein: (a) Süßer Geschmack, z.B. in verschiedenen Kochwurstsorten wie Pate oder bestimmten Leberwurstsorten; (b) Unterstützung und Steuerung der Fermentation (Nahrungssubstrat von eingesetzten mikrobiologischen Kulturen, z.B. für Rohwurst und Rohschinken); (c) Intensivierung von Bräunung und Bräunungsgeschmack (Maillardreaktion); und (d) in geringerem Umfang auch Beeinflussung des aw-Wertes (activity of water).

Durch die technologische Funktionalität werden durch Zugabe von Kohlenhydraten im Produkt verschiedene Eigenschaften mitbestimmt bzw. beeinflusst. Der Geschmack wird von Kohlenhydraten als solche beeinflusst, kann zusätzlich aber auch durch Bräunung infolge der Maillardreaktion (Bräunungsaromen) maßgeblich geprägt werden und/oder durch Fermentation infolge der Verstoffwechselung der Kohlenhydrate durch Mikroorganismen, wobei die Kohlenhydrate zu organischen Säuren und Fermentationsaromen umgesetzt werden. Dies gilt analog auch für den Geruch. Das Aussehen des Produkts kann ebenfalls verändert werden, beispielsweise durch Bräunung infolge der Maillardreaktion. Kohlenhydrate können ferner durch ihre Wirkung als Füllstoffe die Produktausbeute erhöhen und die Textur des Produkts verändern. Letzteres tritt beispielsweise bei Rohwurst auf, welche durch Fermentation von Kohlenhydraten und die damit verbundene Bildung von Genusssäuren wie z.B. Milchsäure angesäuert wird, so dass eine Gelbildung einsetzt, auf der letztlich die Schnittfestigkeit der Rohwurst beruht.

Die üblicherweise in Lebensmittelzubereitungen eingesetzten Kohlenhydrate haben jedoch verschiedene Nachteile. Glukose, Fruktose, Dextrose und invertierte Saccharose werden vergleichsweise schnell von Mikroorganismen verstoffwechselt, was häufig unerwünscht ist. So sind längere Fermentationszeiten häufig wünschenswert, damit sich die komplexen Aromen vollständig entwickeln und ausreifen können. Andere Kohlenhydrate fermentieren hingegen zu langsam oder gar nicht, beispielsweise Maltodextrine, Glukosesirupe, etc. Für viele Lebensmittelzubereitungen haben herkömmlich eingesetzte Kohlenhydrate zudem einen zu intensiven Süßgeschmack, insbesondere Glukose, Fruktose und Saccharose. Laktose und das damit üblicherweise auftretende Milchprotein sind allergen und für viele Menschen unverträglich.

Im Hinblick auf Bräunung infolge der Maillardreaktion, Fermentationseigenschaften, Süße und Endprodukttextur ist Laktose ein bevorzugtes Kohlenhydrat. Von dessen Einsatz wird allerdings aufgrund der Allergen- und Unverträglichkeitsproblematik zunehmend abgesehen. Stattdessen werden Kohlenhydrate, wie Glukose, Fruktose, Saccharose, Glukosesirupe oder Maltodextrine als Alternativen eingesetzt. Dadurch weicht die tatsächliche Produkteigenschaft jedoch von der üblicherweise gewünschten bzw. erwarteten Produkteigenschaft ab. Dies kann bedeuten, dass die Lebensmittelzubereitungen wie z.B. Wurstwaren langsamer und weniger bräunen als mit Laktose. Bei fermentierten Produkten kann dies zudem bedeuten, dass die Lebensmittelzubereitungen schneller als erwartet und erwünscht fermentieren (bei Einsatz von Glukose, Fruktose oder Saccharose), langsamer als erwartet und erwünscht fermentieren (bei Einsatz von Glukosesirupen oder Maltodextrinen), und/oder ein mangelhaftes Geschmacksprofil haben (bei Einsatz von Glukose, Fruktose, Saccharose, Glukosesirupen und Maltodextrinen), z.B. zu sauer oder zu wenig aromatisch sind. Kohlenhydrate mit hoher Süßkraft (Glukose, Fruktose, Saccharose) führen bei Verwendung in den für die Fermentation oder Bräunung erforderlichen Mengen häufig zu einem unerwünscht hohen Süßgeschmack des Endprodukts.

Bei Lebensmittelzubereitungen, welche wesentliche Komponenten ihres Aromas erst durch Fermentation entwickeln, ist es wünschenswert, dass alle Veränderungen der Zusammensetzung, insbesondere der Austausch herkömmlicher Zusatzstoffe bzw. Zutaten wie z.B. Laktose gegen andere Zutaten, die Fermentationsbedingungen nur möglichst geringfügig beeinflussen, damit das Aromaprofil möglichst unverändert bleibt. Unerwünschte Veränderungen im Verlauf des Reifeprozesses lassen sich auf unterschiedliche Weise beobachten, nicht nur in der sensorischen Erfassung gebildeter Fermentationsprodukte mit untypischem Eigengeschmack und Eigengeruch, sondern etwa auch in der Bildung von Gasen, Veränderungen der Farbe, Veränderungen der Textur, Veränderungen des pH-Werts, etc. Grundsätzlich ist es wünschenswert, wenn der Austausch herkömmlicher Zusatzstoffe bzw. Zutaten gegen andere Zutaten möglichst wenige Veränderungen verursacht, da die Abnehmer solcher Lebensmittelzubereitungen häufig schon über lange Zeiträume an bestimmte Eigenschaften der Lebensmittelzubereitungen gewöhnt sind und Veränderungen von Geschmack und äußerem Erscheinungsbild häufig nicht ohne Weiteres akzeptieren.

US 2009/0281305 A1 offenbart ein Verfahren zur Aufreinigung von Cellobiose. Die so erhaltene Cellobiose kann als natürlicher unverdaulicher Süßstoff in Nahrungsmitteln wie z.B. diätetischen Nahrungsmitteln, als Rohstoff für kosmetische Formulierungen sowie in Medizinprodukten eingesetzt werden.

US 2014/0005139 betrifft Cellooligosaccharid-Zusammensetzungen, welche neben Cellobiose u.a. auch Cellotriose, Cellotetraose, Cellopentaose und/oder Cellohexaose enthalten. Diese Zusammensetzungen dienen bestimmten medizinischen oder kosmetischen Zwecken.

DE 20 2014 103 048 U1 offenbart ein Räucherverfahren zur Herstellung von Fleisch und Speck. Dabei wird eine Gewürzmischung eingesetzt, welche ein Disaccharid enthält, vorzugsweise Saccharose.

EP 2 402 454 A1 betrifft ein Verfahren zur Herstellung von Cellobiose aus Biomasse.

JP 2011 026411 offenbart eine Pulverzusammensetzung, welche Cellobiose enthält. Die Zusammensetzung kann u.a. in Nahrungsmitteln und Getränken eingesetzt werden.

In Acton et al, Journal of Food Science, 42(1): 174-178 (ISSN: 0022-1147) wurden verschiedene Kohlenhydrate hinsichtlich ihrer Eignung bei der Fermentation von Rohwurst verglichen. Cellobiose wurde nicht getestet.

Es besteht ein Bedarf an verbesserten Lebensmittelzubereitungen, bei denen nach Möglichkeit auf Laktose als Zusatzstoff verzichtet wird und deren Eigenschaften mit denen von Laktose-haltigen Lebensmittelzubereitungen vergleichbar sind.

Es ist eine Aufgabe der Erfindung, verbesserte Lebensmittelzubereitungen bereitzustellen. Die Lebensmittelzubereitungen sollten nach Möglichkeit eine gute Verträglichkeit, einen guten Geschmack, einen guten Geruch, ein gutes Aussehen sowie eine gute Textur aufweisen.

Diese Aufgabe wird durch den Gegenstand der Patentansprüche gelöst.

Ein erster Aspekt der Erfindung betrifft eine Lebensmittelzubereitung, welche Teile von geschlachteten oder erlegten warmblütigen Tieren, die zum Verzehr durch den Menschen bestimmt sind, und Cellobiose umfasst, wobei die Lebensmittelzubereitung durch Mikroorganismen, welche Cellobiose verstoffwechseln, fermentiert oder vorfermentiert wurde und wobei die Lebensmittelzubereitung weder Cellotriose, noch Cellotetraose, noch Cellopentaose, noch Cellohexaose enthält.

Es wurde überraschend gefunden, dass aromagebende Bakterien Cellobiose wie Laktose intrazellulär aufnehmen, um sie zu verstoffwechseln, was zu einer vergleichbaren Bildung geschmacksgebender Komponenten führt. Mikrobiologische Untersuchungen haben ergeben, dass gängige Starterkulturen auf Cellobiose-haltigen Medien wachsen und hierbei aus Cellobiose organische Säuren gebildet werden. Insofern konnte durch mikrobiologische Untersuchungen gezeigt werden, dass sich Cellobiose bei der Fermentation analog zu Laktose verhält. Für die Fermentation von Lebensmittelzubereitungen wichtige Bakterien, die auf Laktose wachsen, wachsen im Wesentlichen analog auch auf Cellobiose. Die aromagebenden Bakterien nehmen Cellobiose zwar wie Laktose auf, allerdings unterscheiden sich die Menge und das Spektrum der gebildeten Säuren. Beispiel 6 betrifft einen Vergleich zwischen der Fermentation von Cellobiose und Laktose durch verschiedene Bakterienstämme.

Darüber hinaus führt Cellobiose in Brühwurstprodukten wie Bratwurst, Leberkäse, Brühwurst, Grillwurst, gebratenen und gegrillten Hackfleischprodukten und anderen Fleisch- und Wurstwaren zu einer vorteilhaften beschleunigten Bräunungsreaktion (Bräunungsintensität und Bräunungsfarbton), welche mindestens so vorteilhaft wie beim Einsatz von Laktose ist oder sogar besser. Außerdem hat Cellobiose einen günstigen Einfluss auf den aw-Wert; die geringe relative Süßkraft der Cellobiose macht höhere Einsatzmengen im Produkt ohne Beeinträchtigung der Sensorik möglich und erlaubt somit auch eine Beeinflussung des aw-Wertes. Ferner bringt Cellobiose grundsätzlich keine Milchproteine in Produkte ein und weist bei Mengen, wie sie in Fleisch- und Wurstwaren eingesetzt werden, keine Unverträglichkeit auf. Cellobiose hat u.a. auch infolge ihrer vergleichsweise nur geringeren Süßkraft den Vorteil, dass ihr Gehalt erhöht und somit ihre Wirkung z.B. auf die Bräunung verstärkt werden kann, ohne dass gleichzeitig die Lebensmittelzubereitung einen zu süßen Geschmack erhält.

Die Erfindung betrifft eine Lebensmittelzubereitung gemäß Ansprüchen 1-3. Bevorzugt umfasst der Begriff Lebensmittelzubereitung im Sinne der Erfindung Lebensmittel im Sinne Verordnung (EG) Nr. 178/2002, insbesondere alle Stoffe oder Erzeugnisse, die dazu bestimmt sind oder von denen nach vernünftigem Ermessen erwartet werden kann, dass sie in verarbeitetem, teilweise verarbeitetem oder unverarbeitetem Zustand von Menschen aufgenommen werden. Wegen fehlender Verarbeitung oder fehlenden Nährwerts umfasst die erfindungsgemäße Lebensmittelzubereitung bevorzugt jedoch keine Futtermittel; keine lebenden Tiere; keine Pflanzen vor dem Ernten; keine Arzneimittel im Sinne der EG-Richtlinien Richtlinie 65/65/EWG und Richtlinie 92/73/EWG; keine kosmetischen Mittel im Sinne der Richtlinie 76/768/EWG; kein Tabak und keine Tabakerzeugnisse im Sinn der Richtlinie 89/622/EWG; keine Betäubungsmittel und psychotropen Stoffe im Sinn des Einheitsübereinkommens der Vereinten Nationen über Suchtstoffe (1961) und des Übereinkommens der Vereinten Nationen über psychotrope Stoffe (1971); sowie keine Rückstände und Kontaminanten.

Die erfindungsgemäße Lebensmittelzubereitung enthält Cellobiose. Cellobiose (Cellose, 4-O-β-D-Glucopyranosyl-D-glucose, D-Glucosyl-β-(1→4)-D-glucose) ist kommerziell erhältlich.

Bevorzugt enthält die erfindungsgemäße Lebensmittelzubereitung mindestens 0,01 Gew.-% Cellobiose, bevorzugter mindestens 0,05 Gew.-%, noch bevorzugter mindestens 0,1 Gew.-%, am bevorzugtesten mindestens 0,2 Gew.-% und insbesondere mindestens 0,3 Gew.-%, jeweils bezogen auf das Gesamtgewicht der Lebensmittelzubereitung. Bevorzugt enthält die erfindungsgemäße Lebensmittelzubereitung mindestens 0,4 Gew.-% Cellobiose, bevorzugter mindestens 0,5 Gew.-%, noch bevorzugter mindestens 0,6 Gew.-%, am bevorzugtesten mindestens 0,7 Gew.-% und insbesondere mindestens 0,8 Gew.-%, jeweils bezogen auf das Gesamtgewicht der Lebensmittelzubereitung.

Bevorzugt enthält die erfindungsgemäße Lebensmittelzubereitung höchstens 5,0 Gew.-% Cellobiose, bevorzugter höchstens 4,0 Gew.-%, noch bevorzugter höchstens 3,0 Gew.-%, am bevorzugtesten höchstens 2,0 Gew.-% und insbesondere höchstens 1,5 Gew.-%, jeweils bezogen auf das Gesamtgewicht der Lebensmittelzubereitung. In bevorzugten Ausführungsformen enthält die erfindungsgemäße Lebensmittelzubereitung höchstens 1,0 Gew.-% Cellobiose, bevorzugter höchstens 0,75 Gew.-%, noch bevorzugter höchstens 0,50 Gew.-%, am bevorzugtesten höchstens 0,45 Gew.-% und insbesondere höchstens 0,40 Gew.-%, jeweils bezogen auf das Gesamtgewicht der Lebensmittelzubereitung.

In einer bevorzugten Ausführungsform handelt es sich bei der erfindungsgemäßen Lebensmittelzubereitung um Fleisch- oder Wurstwaren gemäß Anspruch 1 und der Gehalt an Cellobiose beträgt bis zu 1,0 Gew.-%.

In einer anderen bevorzugten Ausführungsform handelt es sich bei der erfindungsgemäßen Lebensmittelzubereitung um Rohwurst gemäß Anspruch 1 und der Gehalt an Cellobiose beträgt bis zu 2,0 Gew.-%.

Bevorzugt liegt der Gehalt an Cellobiose im Bereich von 0,01 bis 5,0 Gew.-%, bezogen auf das Gesamtgewicht der Lebensmittelzubereitung. In bevorzugten Ausführungsformen liegt der Gehalt an Cellobiose im Bereich von 0,2(±0,1) Gew.-%, 0,3(±0,15) Gew.-%, 0,4(±0,2) Gew.-%, 0,5(±0,25) Gew.-%, 0,6(±0,3) Gew.-%, 0,7(±0,35) Gew.-%, 0,8(±0,4) Gew.-%, 0,9(±0,45) Gew.-%, 1,0(±0,5) Gew.-%, 1,1(±0,55) Gew.-%, 1,2(±0,6) Gew.-%, 1,3(±0,65) Gew.-%, 1,4(±0,7) Gew.-%, 1,5(±0,75) Gew.-%, 1,6(±0,8) Gew.-%, 1,7(±0,85) Gew.-%, 1,8(±0,9) Gew.-%, 1,9(±0,95) Gew.-%, oder 2,0(±1,0) Gew.-%, jeweils bezogen auf das Gesamtgewicht der Lebensmittelzubereitung.

In bevorzugten Ausführungsformen liegt der Gehalt an Cellobiose im Bereich von 0,01 Gew.-% bis 0,50 Gew.-%, bevorzugter 0,05 Gew.-% bis 0,45 Gew.-%, noch bevorzugter 0,10 bis 0,40 Gew.-%, jeweils bezogen auf das Gesamtgewicht der Lebensmittelzubereitung. Besonders bevorzugt liegt der Gehalt an Cellobiose im Bereich von 0,10(±0,05) Gew.-%, 0,15(±0,10) Gew.-%, 0,15(±0,05) Gew.-%, 0,20(±0,15) Gew.-%, 0,20(±0,10) Gew.-%, 0,20(±0,05) Gew.-%, 0,25(±0,20) Gew.-%, 0,25(±0,15) Gew.-%, 0,25(±0,10) Gew.-%, 0,25(±0,05) Gew.-%, 0,30(±0,20) Gew.-%, 0,30(±0,15) Gew.-%, 0,30(±0,10) Gew.-%, 0,30(±0,05) Gew.-%, 0,35(±0,20) Gew.-%, 0,35(±0,15) Gew.-%, 0,35(±0,10) Gew.-%, 0,35(±0,05) Gew.-%, 0,40(±0,20) Gew.-%, 0,40(±0,15) Gew.-%, 0,40(±0,10) Gew.-%, oder 0,40(±0,05) Gew.-%, jeweils bezogen auf das Gesamtgewicht der Lebensmittelzubereitung.

Die erfindungsgemäße Lebensmittelzubereitung gemäß Anspruch 1 enthält Teile von geschlachteten oder erlegten warmblütigen Tieren, welche zum Verzehr durch den Menschen bestimmt sind. Bevorzugt handelt es sich dabei um Fleisch- und/oder Wurstwaren.

Bevorzugt enthält die erfindungsgemäße Lebensmittelzubereitung mindestens 1,0 Gew.-% Teile von geschlachteten oder erlegten warmblütigen Tieren, bevorzugter mindestens 5,0 Gew.-%, noch bevorzugter mindestens 10 Gew.-%, am bevorzugtesten mindestens 20 Gew.-% und insbesondere mindestens 30 Gew.-%, jeweils bezogen auf das Gesamtgewicht der Lebensmittelzubereitung.

Bevorzugt enthält die erfindungsgemäße Lebensmittelzubereitung höchstens 99,9 Gew.-% Teile von geschlachteten oder erlegten warmblütigen Tieren, bevorzugter höchstens 95 Gew.-%, noch bevorzugter höchstens 90 Gew.-%, am bevorzugtesten höchstens 85 Gew.-% und insbesondere höchstens 80 Gew.-%, jeweils bezogen auf das Gesamtgewicht der Lebensmittelzubereitung.

Bevorzugt liegt der Gehalt an Teilen von geschlachteten oder erlegten warmblütigen Tieren im Bereich von 1,0 bis 99,9 Gew.-%, bezogen auf das Gesamtgewicht der Lebensmittelzubereitung. In bevorzugten Ausführungsformen liegt der Gehalt an Teilen von geschlachteten oder erlegten warmblütigen Tieren im Bereich von 5(±4,9) Gew.-%, 10(±9,9) Gew.-%, 15(±14,9) Gew.-%, 20(±19,9) Gew.-%, 25(±20) Gew.-%, 30(±20) Gew.-%, 35(±20) Gew.-%, 40(±20) Gew.-%, 45(±20) Gew.-%, 50(±20) Gew.-%, 55(±20) Gew.-%, 60(±20) Gew.-%, 65(±20) Gew.-%, 70(±20) Gew.-%, 75(±20) Gew.-%, 80(±19,9) Gew.-%, 85(±14,9) Gew.-%, 90(±9,9) Gew.-%, oder 95(±4,9) Gew.-%, jeweils bezogen auf das Gesamtgewicht der Lebensmittelzubereitung.

Der Gehalt an Fett, vorzugsweise an tierischem Fett, in der erfindungsgemäßen Lebensmittelzubereitung beträgt mindestens 5,0 Gew.-%, am bevorzugtesten mindestens 7,0 Gew.-%, und insbesondere mindestens 10 Gew.-%, bezogen auf das Gesamtgewicht der Lebensmittelzubereitung.

Bevorzugt beträgt der Gehalt an Fett, vorzugsweise an tierischem Fett, in der erfindungsgemäßen Lebensmittelzubereitung höchstens 60 Gew.-%, bevorzugter höchstens 55 Gew.-%, noch bevorzugter höchstens 50 Gew.-%, am bevorzugtesten höchstens 45 Gew.-%, und insbesondere höchstens 40 Gew.-%, bezogen auf das Gesamtgewicht der Lebensmittelzubereitung.

Bevorzugt sind die Teile von geschlachteten oder erlegten warmblütigen Tieren ausgewählt aus der Gruppe bestehend aus Fleisch, Innereien und Speck.

Bevorzugt umfasst "Fleisch" im Sinne der Erfindung nicht nur Fleisch im Sinne der Begriffsbestimmung für "Fleisch", sondern auch zusätzlich im Sinne der Begriffsbestimmungen "Separatorenfleisch", "Fleischzubereitungen", und "Fleischerzeugnisse" gemäß Anhang I der Verordnung (EG) Nr. 853/2004 des Europäischen Parlaments und des Rates vom 29. April 2004.

Bevorzugte Innereien umfassen Herz, Leber, Nieren, Milz, Lunge, Kutteln und Zunge.

Bevorzugte warmblütige Tiere umfassen Rinder, Bullen, Kälber, Ochsen, Schweine, Ferkel, Wildschweine, Frischlinge, Dammwild, Rotwild, Springböcke, Schafe, Lämmer, Kaninchen, Hasen, Geflügel (z.B. Hühner, Perlhühner, Poularden, Truthähne, Fasanen, Gänse, Enten, Wachteln), Pferde, Fohlen, Ziegen und Zicklein.

In einer bevorzugten Ausführungsform enthält die erfindungsgemäße Lebensmittelzubereitung Schweinefleich, bevorzugt einer oder mehrerer der folgenden GEHA-Sortierungsklassen, wobei die entsprechenden LSKZ Ziffern ggf. zusätzlich in Klammern angegeben sind; LSKZ = Leitsätze für Fleisch und Fleischerzeugnisse vom 27./28.11.1974, zuletzt geändert am 08.01.2010 (BAnz. Nr. 16 vom 29.01.2010. GMBI Nr. 5/6 S. 120 ff vom 04.02.2010):
S I | Einlagematerial - Fettgewebs- und sehnenarmes Schweinefleisch (LSKZ 1.121);
S II | magere Abschnitte (Schinken) Grob entfettetes Schweinefleisch (LSKZ 1.122);
S III | mageres Kutterfleisch (Schulter) Grob entfettetes Schweinefleisch (LSKZ 1.122);
S IV | magere Bäuche Fettgewebereiches Schweinefleisch (LSKZ 1.123);
S V | kerniger Bauch - Fettgewebereiches Schweinefleisch (LSKZ 1.123);
S VI | Fettbacke Fettgewebereiches Schweinefleisch (LSKZ 1.123);
S VII | Nackenspeck Speck (LSKZ 1.212);
S VIII | kerniger Rückenspeck Speck (LSKZ 1.212);
S IX | Fettabschnitte Fettgewebe (LSKZ 1.21);
S X | mittelfette Wammen Speck (LSKZ 1.212) ;
S XI | fette Wammen Speck (LSKZ 1.212);
S XII | Schweinemaske Schweinemasken (LSKZ 1.33);
S XIII | Schweinekopffleisch;
S II/III | magere Abschnitte nach Trennsatzbehandlung Grob entfettetes Schweinefleisch (LSKZ 1.122); und/oder
WS 2 | Wildschwein.

In einer bevorzugten Ausführungsform enthält die erfindungsgemäße Lebensmittelzubereitung Innereien und sonstiges vom Schwein, bevorzugt einer oder mehrerer der folgenden GEHA-Sortierungsklassen:
S Leber | Schweineleber;
S Schwarten | Schwarten;
S Herz | Schweineherz; und/oder
S Zunge | Schweinezunge.

In einer bevorzugten Ausführungsform enthält die erfindungsgemäße Lebensmittelzubereitung Rindfleisch, bevorzugt einer oder mehrerer der folgenden GEHA-Sortierungsklassen:
R I | Keule Sehnen- und fettgewebsarmes Rindfleisch (LSKZ 1.111);
R II | magere Abschnitte Grob entsehntes Rindfleisch (LSKZ 1.112);
R III | mageres Kutterfleisch (Schulter) Sehnenreiches Rindfleisch (LSKZ 1.113);
R IV | magere Lappen Sehnenreiches Rindfleisch (LSKZ 1.113);
R V | fette Lappen;
R II/III | magere Abschnitte nach Trennsatzbehandlung Grob entsehntes Rindfleisch (LSKZ 1.112);
KUH I | Keule Sehnen- und fettgewebsarmes Rindfleisch (LSKZ 1.111);
KUH II | magere Abschnitte Grob entsehntes Rindfleisch (LSKZ 1.112);
KA I | Keule Sehnen- und fettgewebsarmes Rindfleisch (LSKZ 1.111);
KA II | magere Abschnitte Grob entsehntes Rindfleisch (LSKZ 1.112);
KA III | mageres Kutterfleisch (Schulter) Sehnenreiches Rindfleisch (LSKZ 1.113); und/oder
KA IV | fette Abschnitte.

In einer bevorzugten Ausführungsform enthält die erfindungsgemäße Lebensmittelzubereitung Innereien und sonstiges vom Rind, bevorzugt einer oder mehrerer der folgenden GEHA-Sortierungsklassen:
R Herz | Rinderherz;
R Leber | Rinderleber; und/oder
R Zunge | Rinderzunge.

In einer bevorzugten Ausführungsform enthält die erfindungsgemäße Lebensmittelzubereitung Geflügelfleisch, bevorzugt einer oder mehrerer der folgenden GEHA-Sortierungsklassen:
Pu I | Putenfleisch (5% Fett);
Pu II | Putenfleisch (10% Fett);
Pu III | Putenfleisch (15% Fett); und/oder
Hä 2 | Hähnchenfleisch (Brathuhn).

In einer bevorzugten Ausführungsform enthält die erfindungsgemäße Lebensmittelzubereitung Lammfleisch, bevorzugt der folgenden GEHA-Sortierungsklasse:
L 1 | Lammfleisch (reines Muskelfleisch).

Bevorzugt ist die erfindungsgemäße Lebensmittelzubereitung gemäß Anspruch 1 ausgewählt aus der Gruppe bestehend aus Schlachterzeugnissen, Fleischerzeugnissen, Pökelfleisch und Wurstwaren.

Lebensmittelzubereitungen umfassen
- streichfähige Rohwurst (2.212ff) (Streichwurst), wie beispielsweise Ahle Wurst, Mettwurst, Teewurst, Leberwurst oder Schurwalder Wurst;
- schnittfeste Rohwurst (2.211ff), wie beispielsweise Landjäger, Kaminwurz, Cabanossi, Salami, Saucisson, Landjäger, Chorizo oder Zervelatwurst;
- Brühwurst (2.22ff), wie beispielsweise Bratwurst, Currywurst, Wiener Würstchen, Frankfurter Würstchen, Bockwurst, Regensburger Wurst, Fleischwurst, Lyoner, Bierschinken, Rotwurst, Pinkel, Presssack, Leberkäse, Weißwurst, Wollwurst, Grützwurst, Stockwurst, Zungenwurst, Blutwurst, Milzwurst, Bregenwurst, Gelbwurst, Burenwurst, Debreziner, Käsekrainer, Mortadella, Jagdwurst oder Bierwurst;
- Rohschinken (2.4ff) und gegarte Pökelfleischerzeugnisse (2.3ff), wie beispielsweise rohem Schinken, gekochtem Schinken, Bierschinken oder geselchtem Schinken;
- Döner oder Drehspieß nach Dönerart (2.511.7) wie beispielsweise Hackdöner, Putendöner und Kalbsdöner; und
- sonstigen Lebensmittelzubereitungen ausgewählt aus der Gruppe bestehend aus Trockenfleisch, Bündner Fleisch, Bresaola, Frikadellen, Fleischpastete, Steak, Corned Beef, Leberkäse, Kassler, Schweinerippchen, Speck, Pâté, Kotelett, Schnitzel, Cordon bleu, Wiener Schnitzel, Schnitzel Wiener Art, Rouladen, Braten, Sauerbraten, Schweinebraten, Lammbraten, Krustenbraten, Surhaxe, Sülze, Aspik, Geschnetzeltem Fleisch, Gyros, Döner, Hackfleisch, Hackepeter, Tatar, Mett, Ragout, Lachsschinken, Speck, Schwarzwälder Speck, Pastrami, Chicken-Nuggets, Bratspieße, Souvlaki, Räuberspieß, etc;.
wobei sich die Leitsatzkennziffern jeweils beziehen auf die Leitsätze für Fleisch- und Wurstwaren, Neufassung vom 25.11.2015 (BAnz AT 23.12.2015 B4, GMBI 2015 S. 1357).

Die unerwarteten Vorteile von Cellobiose können erfindungsgemäß hinsichtlich unterschiedlicher Aspekte der Erfindung zum Ausdruck kommen. Einerseits hat Cellobiose im Hinblick auf Lebensmittelzubereitungen unerwartete Vorteile, welche vor dem Verzehr erwärmt, insbesondere gebraten werden, wobei die Cellobiose teilweise zu Maillard-Produkten reagiert. Andererseits hat Cellobiose im Hinblick auf fermentierte Lebensmittelzubereitungen unerwartete Vorteile, wobei die Cellobiose dabei wenigstens zum Teil, häufig praktisch vollständig verstoffwechselt wird.

Die erfindungsgemäße Lebensmittelzubereitung wurde fermentiert oder vorfermentiert. Ist die Lebensmittelzubereitung zur Fermentation vor dem Verzehr vorgesehen, so handelt es sich vorzugsweise um ein Halbfertigprodukt.

Fermentierte Fleischerzeugnisse sind einem Fachmann bekannt und umfassen u.a. Rohwurst, Rohschinken, rohe Pökelfleischerzeugnisse (Rohpökelwaren), Kochpökelwaren, u.a., welche erfindungsgemäß mit Cellobiose fermentiert wurden.

Erfindungsgemäß bevorzugte Rohwürste sind definiert wie in den Leitsätzen für Fleisch- und Wurstwaren, Neufassung vom 25.11.2015 (BAnz AT 23.12.2015 B4, GMBI 2015 S. 1357) 2.21 ff. Bevorzugte Rohwürste umfassen schnittfähige Rohwürste und streichfähige Rohwürste.

Beispiele erfindungsgemäß bevorzugter schnittfähiger Rohwürste (2.211), welche mit Cellobiose fermentiert wurden, sind nachfolgend aufgeführt, wobei die Zahlen in Klammern den Leitsatzkennziffern in den Leitsätzen für Fleisch- und Wurstwaren, Neufassung vom 25.11.2015 (BAnz AT 23.12.2015 B4, GMBI 2015 S. 1357) entsprechen:
- Schinkenplockwurst, Rohe Schinkenwurst (2.211.03)
- Salami, Katenrauchwurst, Mettwurst, Salametti, Katenkeule, Pfefferkeule, Rinderwurst, Rindswurst, Rindersalami (2.211.05)
- Schlackwurst (2.211.06)
- Cervelatwurst (2.211.08)
- Schinkenmettwurst, Feldkieker (Feldgicker) (2.211.09)
- Westfälische grobe Mettwurst (2.211.10)
- Luftgetrocknete Mettwurst (2.211.12)
- Aalrauchmettwurst (2.211.12)
- Plockwurst (2.211.13)
- Plockwurst einfach (2.211.14)
- Rohe Knoblauchwurst, Rohe Krakauer, Touristenwurst, Mettwurst in Enden (Mettenden), Räucherenden, Colbassa, Kabanossi, Kiolbasse (2.211.15)
- Knoblauchwurst einfach, Touristenwurst einfach, Räucherenden einfach, Mettwurst in Enden einfach (Mettenden einfach) (2.211.16)
- Polnische, Berliner Knacker, Bauernbratwurst, Bauernseufzer, Geräucherte Bratwurst, Debreziner, roh, Ahle Wurst, Rote Wurst, Dürre Runde, Thüringer Knackwurst, Peitschenstecken, Pfefferbeißer (2.211.17)
- Landjäger, Peperoni, Kaminwurzen, Bauernschübling, Rauchpeitschen (2.211.18).

Beispiele erfindungsgemäß bevorzugter streichfähiger Rohwürste (2.212), welche mit Cellobiose fermentiert wurden, sind nachfolgend aufgeführt, wobei die Zahlen in Klammern den Leitsatzkennziffern in den Leitsätzen für Fleisch- und Wurstwaren, Neufassung vom 25.11.2015 (BAnz AT 23.12.2015 B4, GMBI 2015 S. 1357) entsprechen:
- Teewurst, Teewurst Rügenwalder Art, Grobe Teewurst, Rindswurst (2.212.1)
- Mettwurst, Streichmettwurst, Braunschweiger Mettwurst, Braunschweiger, Pfeffersäckchen (2.212.2)
- Grobe Mettwurst, Zwiebelmettwurst, Zwiebelwurst, Frische Mettwurst, Vesperwurst, Pfeffersäckchen grob, Frühstückswurst (2.212.3)
- Schmierwurst, fette Mettwurst (2.212.4)
- Mettwurst einfach, Streichmettwurst einfach (2.212.5).

Rohe Pökelfleischerzeugnisse sind definiert wie in den Leitsätzen für Fleisch- und Wurstwaren, Neufassung vom 25.11.2015 (BAnz AT 23.12.2015 B4, GMBI 2015 S. 1357) 2.4ff. "Rohe Pökelfleischerzeugnisse", welche mit Cellobiose fermentiert wurden, umfassen
- Rohschinken (2.4.1),
- Rohschinken, Rohschneider (2.411)
- Knochenschinken (2.411.1)
- Spaltschinken (2.411.2)
- Kernschinken, Kronenschinken, Papenschinken (2.411.3)
- Bauernschinken, Landschinken (2.411.4)
- Nussschinken (2.411.5)
- Schinkenspeck, Schinkenecke, Eckschinken (2.411.6)
- Rinderrauchfleisch, Neuenahrer Rauchfleisch, Hamburger Rauschfleisch, Nagelholz (2.412)
- Lachsschinken (2.413.1)
- Truthahn-Lachsschinken (2.413.2)
- Lachsfleisch, Karbonadenschinken (2.413.3)
- Räucherling, Räucherlendchen (2.413.4)
- von Knochen, Schwarte und sichtbarem Fettgewebe befreite Rohschinken (2.414), z.B. Knochenschinken, Rinderrauchfleisch, Neuenahrer Rauchfleisch, Hamburger Rauchfleisch, Nagelholz, Rohschinken, Rohschneidern, Katenschinken, Spaltschinken, Kern-, Bauern-/Landschinken und Frühstücksschinken, Kronen-, Papen-, Katen-, Tennen-, Dielen- (Deelen-) schinken, Katenrauchschinken, Landrauchschinken, Roll- oder Nussschinken, Blasenschinken, Karbonadenschinken, Schinkenspeck, Schinkenecken, Eckschinken, Lachsschinken sowie Lachsfleisch.
- sonstige Rohpökelwaren (2.42)
- aus anderen Fleischteilen des Schweines hergestellte rohe Pökelfleischerzeugnisse (2.421), z.B. Schulterspeck, Räucher-Nacken, Karbonaden-Rauchfleisch, geräuchertes Eisbein, geräuchertes Rinderfilet, gepökelte Gänsebrust, gepökelte Truthahnoberkeule
- Breitseite oder Ganze Seiten (2.421.1)
- Bauchspeck, Frühstücksspeck, Dörrfleisch (2.421.2).

Geeignete Mikroorganismen, welche zur Fermentation solcher Fleischerzeugnisse geeignet sind und eingesetzt werden, sind einem Fachmann ebenfalls bekannt und umfassen Bakterien (z.B. *Lactobacillus, Lactococcus, Pediococcus, Kocuria, Staphylococcus,* etc.), Hefen (z.B. *Debaryomyces, Candida,* etc.) und Schimmelpilze (z.B. *Penicillium* etc.).

Die Fermentation erfolgt erfindungsgemäß durch einen Mikroorganismus ausgewählt aus
- Bakterien ausgewählt aus der Gruppe bestehend aus Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae. Pediococcus pentosaceus. Kocuria varians, Staphylococcus carnosus, Staphylococcus xylosus, Staphylococcus equorum, Staphylococcus succinus, und Staphylococcus saprophyticus;
- Hefen ausgewählt aus der Gruppe bestehend aus Debaryomyces hansenii, Candida utilis, und Candida zeylanoides; und
- Schimmelpilzen ausaewählt aus der Gruppe bestehend Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantiogriseum, Penicillium commune, und Penicillium rubrum.

In einer bevorzugten Ausführungsform ist die erfindungsgemäße Lebensmittelzubereitung gemäß Anspruch 1 dazu vorgesehen, vor dem Verzehr erwärmt zu werden, wobei die Erwärmung vorzugsweise durch Braten oder Grillen erfolgt. In einer anderen bevorzugten Ausführungsform wurde die erfindungsgemäße Lebensmittelzubereitung gemäß Anspruch 1 bei der Herstellung erwärmt, vorzugsweise durch Braten, Grillen, Kochen, Dämpfen oder Räuchern. Wurstsorten, die vor dem Verzehr erhitzt werden, können durch den erfindungsgemäßen Einsatz von Cellobiose gut bräunen (Ablauf einer Maillard-Reaktion). Hierbei sind erfindungsgemäß insbesondere solche Fleischereierzeugnisse gemäß Ansprich 1 bevorzugt, die gegrillt, gebraten bzw. erhitzt werden und bei denen eine Bräunung erwünscht ist. Beispiele von Erzeugnissen, die gegrillt, gebraten bzw. erhitzt werden sind Brühwürste, Bratwürste, Hackfleischerzeugnisse, Kochwürste und Kochpökelfleischerzeugnisse.

Brühwürste sind definiert wie in den Leitsätzen für Fleisch- und Wurstwaren, Neufassung vom 25.11.2015 (BAnz AT 23.12.2015 B4, GMBI 2015 S. 1357) 2.22 ff. Brühwürste umfassen Brühwürstchen, fein zerkleinerte Brühwürste, grobe Brühwurst sowie Brühwurst mit Einlagen.

Beispiele von Brühwürstchen (2.221), welche Cellobiose enthalten können, sind nachfolgend aufgeführt, wobei die Zahlen in Klammern den Leitsatzkennziffern in den Leitsätzen für Fleisch- und Wurstwaren, Neufassung vom 25.11.2015 (BAnz AT 23.12.2015 B4, GMBI 2015 S. 1357) entsprechen:
- Würstchen nach Frankfurter Art, Schinkenwürstchen (2.221.01)
- Wiener, Bockwurst, Würstchen, Saftwürstchen, Cocktailwürstchen, Dünne, Münchner Dampfwurst, Saitenwürstchen, Bouillonwürstchen, Fleischwürstchen, Jauersche, Knobländer (2.221.03)
- Pfälzer, Augsburger, Regensburger, Debreziner, Jagdwürstchen, Brühpolnische, Bauernwürstchen, Bauernwurst, Bauernseufzer, Krainer, Schützenwurst, Peitschenstecken (2.221.04)
- Dicke, Knackwurst, Rote, Servela, Klöpfer, Knacker, Rindswurst, Schüblinge (2.221.05)
- Knacker einfach, Schüblinge einfach, Servela einfach, Klöpfer einfach, Rote einfach (2.221.06)
- Kalbsbratwurst, Weißwurst (2.221.07)
- Wollwurst, Geschwollene (2.221.08)
- Münchner Weißwurst (2.221.09)
- Stockwurst, Weißwurst einfach, Lungenwurst, Berliner Dampfwurst, Kümmelwurst (2.221.10)
- Grobe Bratwurst, Schweinsbratwürstchen, Schweinswürstchen, Fränkische Bratwurst, Pfälzer Bratwurst, Hessische Bratwurst, Rostbratwurst, Treuchtlinger, Rheinische Bratwurst, grob (2.221.11)
- Bratwurst, Rheinische Bratwurst, Schlesische Bratwurst, Rostbratwurst, fein zerkleinert (2.221.12).

Beispiele fein zerkleinerter Brühwürste (2.222), welche Cellobiose enthalten können, sind nachfolgend aufgeführt, wobei die Zahlen in Klammern den Leitsatzkennziffern in den Leitsätzen für Fleisch- und Wurstwaren, Neufassung vom 25.11.2015 (BAnz AT 23.12.2015 B4, GMBI 2015 S. 1357) entsprechen:
- Lyoner, Schinkenwurst, Norddeutsche Mortadella, Pariser Fleischwurst, Rheinische Fleischwurst, Frankfurter Fleischwurst, Kalbfleischwurst, Kalbfleischkäse, Breslauer, Sardellenwurst (2.222.1)
- Fleischwurst, Stadtwurst, Bremer Gekochte, Fleischkäse, Leberkäs(e), Schnittfeste Leberwurst, Leberrolle, Bayerischer Leberkäs(e), Knoblauchwurst, Kasseler Kochwurst (2.222.2)
- Fleischwurst einfach, Stadtwurst einfach, Fleischkäse einfach (2.222.3)
- Mosaikpastete, Schachbrettpastete, schnittfeste Leberpastete und andere Brühwurstpasteten und -rouladen ohne grobe Fleischeinlagen sowie fein zerkleinerte Grundmasse für Brühwurstpasteten und -rouladen mit groben Fleischeinlagen (z. B. Zungenpastete, Filetpastete) (2.222.4)
- Fleischsalatgrundlage (2.222.5)
- Gelbwurst, Kalbskäse, Weißer Fleischkäse (2.222.6)
- Weiße im Ring, Weiße Lyoner (2.222.7).

Beispiele grober Brühwürste (2.223), welche Cellobiose enthalten können, sind nachfolgend aufgeführt, wobei die Zahlen in Klammern den Leitsatzkennziffern in den Leitsätzen für Fleisch- und Wurstwaren, Neufassung vom 25.11.2015 (BAnz AT 23.12.2015 B4, GMBI 2015 S. 1357) entsprechen:
- Bayerische Bierwurst, Göttinger, Blasenwurst, Kochsalami, Tiroler, Krakauer, Jagdwurst (süddeutsche Art), Celler Gekochte, Bierkugel (2.223.1)
- Jagdwurst norddeutsche Art, Grobe Schinkenwurst, Gefüllte Schweinsbrust, Gefüllter Schweinsfuß, Gefüllter Schweinskopf, Grobe Lyoner, Stuttgarter, Bierwurst, Hildesheimer, Grobe Stadtwurst, Nürnberger Stadtwurst, Frühstücksfleisch, Stuttgarter Leberkäs(e), Römerbraten, Wienerbraten, Bierkugel, Senatorenwurst (2.223.2)
- Grober Leberkäs(e), Grober Fleischkäse, Roter Fleischkäse, Grobe Fleischwurst, Schweinskäse (2.223.3)
- Gebrühte Knoblauchwurst, Gebrühte Krakauer, Cabanossi, Gebrühte Touristenwurst (2.223.4)
- Gebrühte Touristenwurst einfach, Gebrühte Krakauer einfach (2.223.5)
- Schweinskopfwurst (2.223.6)
- Weißer Schweinskäse, Weiße grobe Lyoner (2.223.7).

Beispiele von Brühwürsten mit Einlagen (2.224), welche Cellobiose enthalten können, sind nachfolgend aufgeführt, wobei die Zahlen in Klammern den Leitsatzkennziffern in den Leitsätzen für Fleisch- und Wurstwaren, Neufassung vom 25.11.2015 (BAnz AT 23.12.2015 B4, GMBI 2015 S. 1357) entsprechen:
- Bierschinken, Rinder-Bierschinken, Geflügel-Bierschinken, Schinkenpastete (2.224.1)
- Filetpastete, Imitierte Wildschweinpastete und andere Brühwurstpasteten und -rouladen mit bindegewebsarmen Fleischeinlagen (2.224.2)
- Presskopf, Ansbacher, Eisbeinpastete und andere Brühwurstpasteten und -rouladen mit deklarierten bindegewebsreichen Fleischeinlagen, Saure Rolle (2.224.3)
- Süddeutsche Mortadella, Zungenwurst, Zungenpastete, Zungenroulade, Herzwurst (2.224.4)
- Zigeunerwurst, Paprikaspeckwurst (2.224.6)
- Milzwurst (2.224.7).

Bratwürste sind definiert wie in den Leitsätzen für Fleisch- und Wurstwaren, Neufassung vom 25.11.2015 (BAnz AT 23.12.2015 B4, GMBI 2015 S. 1357) 2.24 ff.

Bevorzugt enthält die erfindungsgemäße Lebensmittelzubereitung keine Laktose. Wenn die erfindungsgemäße Lebensmittelzubereitung Laktose enthält, so ist diese Laktose bevorzugt keine zugesetzte Laktose, d.h. lediglich als (natürlicher) Bestandteil anderer Inhaltsstoffe der Lebensmittelzubereitung vorhanden. Wenn die erfindungsgemäße Lebensmittelzubereitung Laktose enthält, so beträgt der Gehalt an Laktose bevorzugt höchstens 1,0 Gew.-%, bevorzugter höchstens 0,5 Gew.-%, noch bevorzugter höchstens 0,1 Gew.-%, am bevorzugtesten höchstens 0,05 Gew.-%, und insbesondere höchstens 0,01 Gew.-%, jeweils bezogen auf das Gesamtgewicht der Lebensmittelzubereitung.

Bevorzugt enthält die erfindungsgemäße Lebensmittelzubereitung keine Glukose, keine Fruktose, keine Saccharose, keine Dextrose, keinen Glukosesirup und/oder kein Maltodextrin; besonders bevorzugt weder Glukose, noch Fruktose, noch Saccharose, noch Dextrose, noch Glukosesirup, noch Maltodextrin. Wenn die erfindungsgemäße Lebensmittelzubereitung Glukose, Fruktose, Saccharose, Dextrose, Glukosesirup und/oder Maltodextrin enthält, so ist diese Glukose, Fruktose, Saccharose, Dextrose, dieser Glukosesirup und/oder dieses Maltodextrin bevorzugt keine zugesetzte Glukose, Fruktose, Saccharose, Dextrose, kein zugesetzter Glukosesirup und/oder kein zugesetztes Maltodextrin, d.h. lediglich als (natürlicher) Bestandteil anderer Inhaltsstoffe der Lebensmittelzubereitung vorhanden. Wenn die erfindungsgemäße Lebensmittelzubereitung Glukose, Fruktose, Saccharose, Dextrose, Glukosesirup und/oder Maltodextrin enthält, so beträgt der Gehalt an Glukose, Fruktose, Saccharose, Dextrose, Glukosesirup und/oder Maltodextrin jeweils unabhängig voneinander bevorzugt höchstens 1,0 Gew.-%, bevorzugter höchstens 0,5 Gew.-%, noch bevorzugter höchstens 0,1 Gew.-%, am bevorzugtesten höchstens 0,05 Gew.-%, und insbesondere höchstens 0,01 Gew.-%, jeweils bezogen auf das Gesamtgewicht der Lebensmittelzubereitung.

Die erfindungsgemäße Lebensmittelzubereitung enthält weder Cellotriose, noch Cellotetraose, noch Cellopentaose, noch Cellohexaose.

Ein weiterer Aspekt der Offenbarung betrifft *Convenience Food,* welches küchenfertig, teilfertig, garfertig, zubereitungsfertig oder verzehrfertig sein kann, und die erfindungsgemäße Lebensmittelzubereitung umfasst.

Grundsätzlich können alle in den Leitsätzen für Fleisch- und Wurstwaren, Neufassung vom 25.11.2015 (BAnz AT 23.12.2015 B4, GMBI 2015 S. 1357) aufgeführten Erzeugnisse sowie deren Abwandlungen in der Fleischrezeptur mit Cellobiose hergestellt werden.

Alle bevorzugten Ausführungsformen der Erfindung, welche vorstehend im Zusammenhang mit der erfindungsgemäßen Lebensmittelzubereitung erläutert wurden, gelten analog auch für das offenbarte *Convenience Food* und werden daher nicht wiederholt.

Bei verzehrfertigem *Convenience Food* handelt es sich bevorzugt um Fertiggerichte, d.h. Lebensmittelzubereitungen, die bevorzugt vollständige Mahlzeiten ergeben und so gegessen werden oder eventuell zuvor noch kurz aufgewärmt werden müssen. Teilfertiges *Convenience Food* umfasst küchenfertige Lebensmittel, die vor dem Garen noch vorbereitet werden müssen; garfertige Lebensmittel, die nur noch gegart werden müssen; sowie zubereitungsfertige Lebensmittel, die vorbereitet und gegart sind und nur noch gewärmt oder vermischt werden müssen.

Bevorzugt umfasst das offenbarte *Convenience Food* Suppen, Eintöpfe, Gebäck, Salzgebäck, Frittiergut, Pizza, Flammkuchen, belegtes Gebäck (wie z.B. belegtes Baguette, belegtes Toast, etc.), Reisgerichte, Nudelgerichte (wie z.B. Lasagne, Cannelloni, Tortellini, Ravioli, Maultaschen, etc.), Fertigsaucen, Fertigmenüs, etc.

Ein weiterer Aspekt der Erfindung betrifft die Verwendung von Cellobiose als Zutat in Lebensmittelzubereitungen umfassend Teile von geschlachteten oder erlegten warmblütigen Tieren, welche zum Verzehr durch den Menschen bestimmt sind, wobei Cellobiose zur Verbesserung des Reifungsprozesses und/oder der Aromabildung durch Mikroorganismen fermentiert wird. Bevorzugt ist dabei die Cellobiose in einer Gewürzmischung und/oder Fermentationsmischung enthalten.

Der Begriff "Zutat" im Sinne der Erfindung umfasst alle Beimengungen, welche Erzeugnissen beigemischt werden können, die zum Verzehr durch den Menschen bestimmt sind.

Alle bevorzugten Ausführungsformen der Erfindung, welche vorstehend im Zusammenhang mit der erfindungsgemäßen Lebensmittelzubereitung und dem offenbarten *Convenience Food* erläutert wurden, gelten analog auch für die erfindungsgemäße Verwendung gemäß Ansprüchen 6-7 und werden daher nicht wiederholt.

Ein weiterer Aspekt der Offenbarung betrifft eine Gewürzmischung und/oder Fermentationsmischung umfassend Cellobiose (nicht beansprucht), bevorzugt zur Fermentation der erfindungsgemäßen Lebensmittelzubereitung.

Der Gehalt an Cellobiose in der offenbarten Gewürzmischung und/oder Fermentationsmischung ist nicht eingeschränkt und liegt bevorzugt im Bereich von 0,1 bis 80 Gew.-%, bevorzugter 15 bis 65 Gew.-%, bezogen auf das Gesamtgewicht der Gewürzmischung und/oder Fermentationsmischung.

Die Gewürzmischung und/oder Fermentationsmischung enthält bevorzugt zusätzlich wenigstens einen Mikroorganismus, welcher zur Fermentation von Teilen von geschlachteten oder erlegten warmblütigen Tieren, welche zum Verzehr durch den Menschen bestimmt sind, vorzugsweise zur Fermentation der Lebensmittelzubereitung, geeignet ist, vorzugsweise ausgewählt aus Bakterien (z.B. *Lactobacillus, Lactococcus, Pediococcus, Kocuria, Staphylococcus,* etc.), Hefen (z.B. *Debaryomyces, Candida,* etc.) und Schimmelpilze (z.B. *Penicillium* etc.). Bevorzugte Beispiele dieser Mikroorganismen wurden vorstehend bereits beschrieben und werden daher nicht wiederholt.

Neben Cellobiose umfasst die offenbarte Gewürzmischung und/oder Fermentationsmischung bevorzugt eine oder mehrere Zutaten ausgewählt aus der Gruppe bestehend aus Gewürzen und Antioxidationsmitteln.

Grundsätzlich kommen alle Gewürze in Betracht, welche aufgeführt werden in den Leitsätzen für Gewürze und andere würzende Zutaten vom 27.5.1998 (BAnz. Nr. 183a vom 30.9.1998, GMBI. Nr. 30, S. 577 vom 30.9.1998) sowie Extrakte und ätherische Öle aus Gewürzen. Beispiele bevorzugter Gewürze sind Anis, Basilikum, Bohnenkraut Chillies, Chilli, Chillischote, Roter Pfeffer, Spanischer Pfeffer, Cumin, Kreuzkümmel, Römischer Kümmel, Curry-Pulver, Curry, Curry-Powder, Dill, Estragon, Fenchel, Ingwer, Kapern, Kardamom, Kerbel, Knoblauch, Koriander, Kümmel, Kurkuma, Gelbwurz, Liebstöckel, Lorbeerblätter, Macis, Majoran, Muskatnuss, Nelken, Gewürznelken, Oregano, Wilder Majoran, Dost, Paprika, Petersilie, Pfeffer, grün, Grüner Pfeffer, Pfeffer, schwarz, Schwarzer Pfeffer, Pfeffer, weiß, Weißer Pfeffer, Pilze, Piment, Nelkenpfeffer, Rosa Beeren, Rosa Pfeffer, Rosmarin, Safran, Salbei, Schnittlauch, Schwarzkümmel, Sellerieblätter, Senfkörner, Sternanis, Thymian, Vanille, Wacholderbeere, Zimt, Zwiebel. Besonders bevorzugte Gewürze sind Pfeffer, Majoran, Koriander, Knoblauch, Kumin, etc.

Der Gehalt an Gewürzen in der offenbarten Gewürzmischung und/oder Fermentationsmischung ist nicht eingeschränkt und liegt bevorzugt im Bereich von 0,1 bis 50 Gew.-%, bezogen auf das Gesamtgewicht der Gewürzmischung und/oder Fermentationsmischung.

Bevorzugte Beispiele für Antioxidationsmittel sind Ascorbat, Ascorbinsäure, Vitamin E, Rosmarinextrakt oder daraus gewonnene Carnesolsäure und weitere Genusssäuren sowie deren Salze.

Der Gehalt an Ascorbat in der offenbarten Gewürzmischung und/oder Fermentationsmischung ist nicht eingeschränkt und liegt bevorzugt im Bereich von 0,1 bis 15 Gew.-%, bezogen auf das Gesamtgewicht der Gewürzmischung und/oder Fermentationsmischung.

Alle bevorzugten Ausführungsformen der Erfindung, welche vorstehend im Zusammenhang mit der erfindungsgemäßen Lebensmittelzubereitung, dem offenbarten *Convenience Food* und der erfindungsgemäßen Verwendung erläutert wurden, gelten analog auch für die offenbarte Gewürzmischung und/oder Fermentationsmischung und werden daher nicht wiederholt.

Ein weiterer Aspekt der Erfindung betrifft die Verwendung der offenbarten Gewürzmischung und/oder Fermentationsmischung zur Fermentation von Teilen von geschlachteten oder erlegten warmblütigen Tieren, welche zum Verzehr durch den Menschen bestimmt sind, gemäß Ansprüchen 6-7.

Ein weiterer Aspekt der Erfindung betrifft ein Verfahren gemäß Anspruch 4 zur Herstellung der erfindungsgemäßen Lebensmittelzusammensetzung gemäß einem der Ansprüche 1-3, umfassend die Schritte
**(a)** Mischen von Teilen von geschlachteten oder erlegten warmblütigen Tieren, welche zum Verzehr durch den Menschen bestimmt sind, und einer Zusammensetzung, welche Cellobiose enthält; und
**(b)** Reifen der gemäß Schritt (a) hergestellten Mischung durch Fermentation mit Mikroorganismen, welche Cellobiose verstoffwechseln;
wobei die Mikroorganismen ausgewählt sind aus
- Bakterien ausgewählt aus der Gruppe bestehend aus *Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae Pediococcus pentosaceus, Kocuria varians, Staphylococcus camosus, Staphylococcus xylosus, Staphylococcus equorum, Staphylococcus succinus,* und *Staphylococcus saprophyticus*;
- Hefen ausgewählt aus der Gruppe bestehend aus *Debaryomyces hansenii, Candida utilis,* und *Candida zeylanoides;* und
- Schimmelpilzen ausgewählt aus der Gruppe bestehend *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum. Penicillium solitum, Penicillium aurantiogriseum, Penicillium commune,* und *Penicillium rubrum*.

Bevorzugt ist dabei die Zusammensetzung, welche Cellobiose enthält, eine Gewürzmischung und/oder eine Fermentationsmischung, besonders bevorzugt die vorstehend beschriebene, offenbarte Gewürzmischung und/oder Fermentationsmischung.

Das erfindungsgemäße Verfahren umfasst den Schritt (b) Reifen der gemäß Schritt (a) hergestellten Mischung gemäß Anspruch 4(b).

In einer bevorzugten Ausführungsform umfasst das erfindungsgemäße Verfahren zusätzlich auch die anschlie-ßende Erwärmung, vorzugsweise durch Braten, Grillen, Kochen, Dämpfen oder Räuchern.

Die erfindungsgemäße Fermentation kann vorzugsweise durch Lagerung unter geeigneten Bedingungen für eine geeignete Dauer erfolgen.

Alle bevorzugten Ausführungsformen der Erfindung, welche vorstehend im Zusammenhang mit der erfindungsgemäßen Lebensmittelzubereitung, dem offenbarten *Convenience Food,* der offenbarten Fermentationszubereitung bzw. den erfindungsgemäßen Verwendungen von Cellobiose erläutert wurden, gelten analog auch für das erfindungsgemäße Verfahren und werden daher nicht wiederholt.

Ein weiterer Aspekt der Offenbarung betrifft eine Lebensmittelzubereitung, welche nach dem erfindungsgemäßen Verfahren erhältlich ist. Bevorzugt enthält die Lebensmittelzusammensetzung fermentierte Cellobiose und/oder eine Restmenge an nicht-fermentierter Cellobiose.

Die nachfolgenden Beispiele illustrieren die Erfindung, sind jedoch nicht einschränkend auszulegen.

### Beispiel 1 - Rohschinken:

Rezeptur:
Fleischart: Sauenhüften
Gütezusätze und Gewürze pro kg Fleisch:

| Bezeichnung | 1-1 (Vergleich) | 1-2 (Vergleich) | 1-3 (erfindungsgemäß) |
|---|---|---|---|
| Nitritpökelsalz | 35 g | 35 g | 35 g |
| Pfeffer, schwarz | 2,5 g | 2,5 g | 2,5 g |
| Koriander | 1,0 g | 1,0 g | 1,0 g |
| Ascorbat | 0,5 g | 0,5 g | 0,5 g |
| VH Roh-Pökel-Star | 0,5 g | 0,5 g | 0,5 g |
| Rosipur D (Dextrose) | 4,0 g | - | - |
| Laktose | - | 4,0 g | - |
| Cellobiose | - | - | 4,0 g |

Versuchsdurchführung: Aus den Gewürzen und Additiven wurde eine Mischung hergestellt. Die Schinken wurden damit eingerieben. Im Vakuumbeutel wurden die so behandelten Schinken gereift, wobei die Reifungsdauer 1 Woche pro kg Schinken betrug. Danach wurden die Schinken eine weitere Woche im Kühlraum gelagert (durchbrennen lassen). Anschließend wurden die Schinken getrocknet und geräuchert (bei ca. 25-30 °C), bis die Schinken goldgelb waren.

Bewertung: Allgemein zeigten alle Schinken einen sehr milden mürben Eindruck. Nur kleine Nuancen ließen sich bei den drei verschiedenen Schinken sensorisch unterscheiden:
- Vergleichsbeispiel 1-1:: Dextrose: Der Schinken zeigte keinen Fehlgeschmack; der Säureeindruck war in Ordnung, jedoch war eine Säure zu schmecken; die Farbe des Schinkens war etwas heller als bei den Schinken gemäß Beispielen 1-2 und 1-3;
- Vergleichsbeispiel 1-2:: Laktose: Der Schinken war milder im Säureeindruck als der Schinken gemäß Beispiel 1-1; der Schinken zeigte keinen Fehlgeschmack; die Farbe des Schinkens war sehr schön rot;
- Erfindungsgemäßes Beispiel 1-3:: Cellobiose: Der Schinken zeigte sich im Vergleich gegenüber den beiden anderen Schinken gemäß Beispielen 1-1 und 1-2 etwas voller im Geschmack; Säure war abwesend; die Farbe des Schinkens war sehr schön rot.

Die Ergebnisse belegen, dass Cellobiose sehr ähnliche Eigenschaften wie Laktose zeigt. Der Schinken gewann durch erhöhten Zuckergehalt an Aroma. Das Reifearoma bei dem erfindungsgemäßen Schinken mit Cellobiose war sehr schön, was bei den Vergleichsschinken mit Dextrose bzw. mit Laktose nicht unbedingt gegeben war.

Außerdem wurden in Analogie Rohschinken mit 3 verschiedenen Zuckern (Dextrose, Cellobiose, Lactose) hergestellt und fermentiert. 4 Sauenhüften wurden gewogen und jeweils mit einer Mischung von 44 g/kg Gesamtmischung und 0,5 g/kg geeigneten Rohschinkenkulturen gut vermengt. Das so erzeugte Produkt wurde in einem Vakuumbeutel für 4 Wochen im Kühlraum fermentiert, 3 Tage durchgebrannt und getrocknet, ohne geräuchert zu werden.

Bei der Aromaanalyse von vergleichend mit Dextrose, Cellobiose und Lactose gereiften Schinken konnten in bei der Bestimmung von 30 sensorisch aktiven Verbindungen zwischen den mit Cellobiose und Lactose gereiften Salamis mit Ausnahme einer Verbindung keine qualitativen und quantitativen Unterschiede detektiert werden.

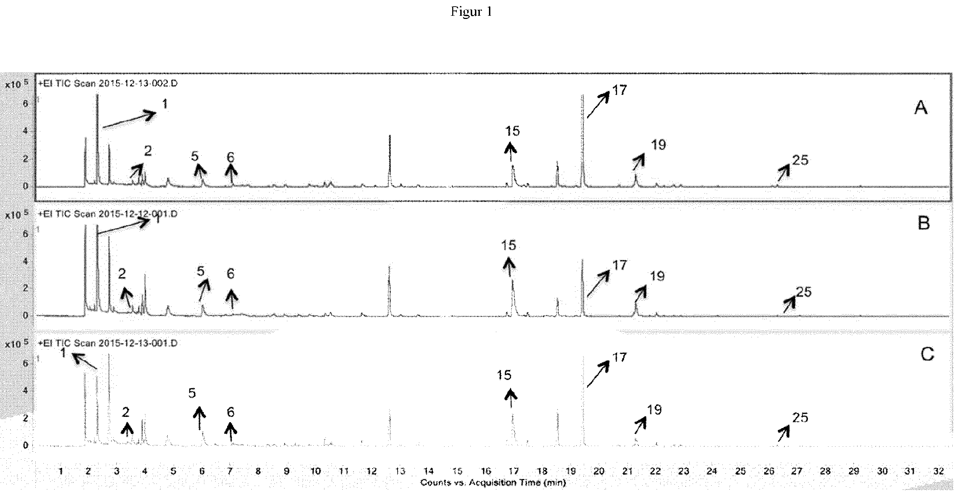

Figur 1 zeigt das HS-SPME-GC-MS/MS-O-Chromatogramm von Schinken/Dextrose (A), Schinken/Cellobiose (B) und Schinken/Lactose (C).

Bedeutsame Abweichungen fanden sich in dem Dextrose-Ansatz wieder: so waren einige Verbindungen in Spurengehalten in den Retentionszeitbereichen von 7-16 min, 22-26 min sowie 27-31 min ausschließlich in den mit Dextrose gereiften Schinken bestimmbar, so dass Cellobiose diesbezüglich keinen Nachteil gegenüber der Lactose zeigte.

Das Gewicht der Rohschinken wurde über die Zeit bestimmt und die Messwerte sind in nachfolgender Tabelle zusammengefasst:

| Tag/% | Dextrose | Lactose | Cellobiose |
|---|---|---|---|
| 0 | 0,26 | 0,57 | 0,59 |
| 7 | -10,01 | -10,18 | -10,62 |
| 10 | -13,16 | -13,62 | -14,18 |
| 13 | -16,23 | -16,68 | -16,77 |
| 23 | -22,46 | -23,29 | -23,65 |

Der pH Wert der Rohschinken wurde ebenfalls über die Zeit bestimmt und die Messwerte sind in nachfolgender Tabelle zusammengefasst:

| Tag/pH | Dextrose | Lactose | Cellobiose |
|---|---|---|---|
| 0 | 5,57 | 5,64 | 5,64 |
| 7 | 5,60 | 5,64 | 5,61 |
| 10 | 5,58 | 5,60 | 5,58 |
| 13 | 5,62 | 5,67 | 5,67 |
| 23 | 5,58 | 5,58 | 5,52 |

### Beispiel 2 - Rohwurst/Salami:

### Rezeptur

### Fleischarten:

| Fleischart | Anteil |
|---|---|
| Schweinefleisch II, frisch | 20% |
| Schweinefleisch II, gefroren | 35% |
| Schweinefleisch V, gefroren | 30% |
| Schweinefleisch VIII, gefroren | 15% |

### Gütezusätze und Gewürze pro kg:

| Bezeichnung | 2-1 (Vergleich) | 2-2 (Vergleich) | 2-3 (erfindungsgemäß) |
|---|---|---|---|
| Nitritpökelsalz | 28 g | 28 g | 28 g |
| Pfeffer, schwarz | 2,0 g | 2,0 g | 2,0 g |
| Knoblauch Granulat | 0,5 g | 0,5 g | 0,5 g |
| Ascorbat | 0,5 g | 0,5 g | 0,5 g |
| Rosipur-D | 1,0 g | 1,0 g | 1,0 g |
| Primal sk natur rapid | 0,5 g | 0,5 g | 0,5 g |
| Rosipur Dextrose | 3,0 g | - | - |
| Laktose | - | 3,0 g | - |
| Cellobiose | - | - | 3,0 g |

Versuchsdurchführung: Das gefrorene Fleischmaterial wurde im Kutter auf ca. 3-4 mm Endkörnung zerkleinert. Die Additive, Salz, Gewürze und das frische Fleischmaterial wurden zugeben. Die so behandelte Mischung wurde in Kaliber 55-60 gefüllt und bis zu einem Gewichtsverlust von 30% gereift.

Bewertung: Nach 13 Tagen hatte die Rohwurst 20% Gewicht verloren und einen durchschnittlichen pH-Wert von 5,1.
- Vergleichsbeispiel 2-1:: Dextrose: Die Rohwurst zeigte etwas hellere Farbe im Vergleich zur Rohwurst gemäß Beispielen 2-2 und 2-3. Die Rohwurst zeigte keinen Fehlgeschmack, war jedoch nicht wirklich aromatisch;
- Vergleichsbeispiel 2-2:: Laktose: Die Farbe war gut und das Aroma war besser als bei der Rohwurst gemäß Beispiel 2-1. Der Geschmack war voll, sehr rund und intensiv mit gutem Aromaprofil;
- Erfindungsgemäßes Beispiel 2-3:: Cellobiose: Die Farbe war sehr schön rot. Aroma fehlte jedoch ähnlich wie bei der Rohwurst gemäß Beispiel 2-1. Die Rohwurst zeigte keinen Fehlgeschmack.

Die experimentellen Ergebnisse für das erfindungsgemäße Beispiel 2-3 (Cellobiose) ähneln hinsichtlich der Sensorik deutlich den Ergebnissen für das Vergleichsbeispiel 2-1 (Dextrose). Hinsichtlich der Farbe war das erfindungsgemäße Beispiel 2-3 (Cellobiose) vergleichbar mit dem Vergleichsbeispiel 2-2 (Laktose). Im Allgemeinen schneidet die Cellobiose vom Aromaprofil etwas besser ab als Dextrose, jedoch etwas schwächer als Laktose.

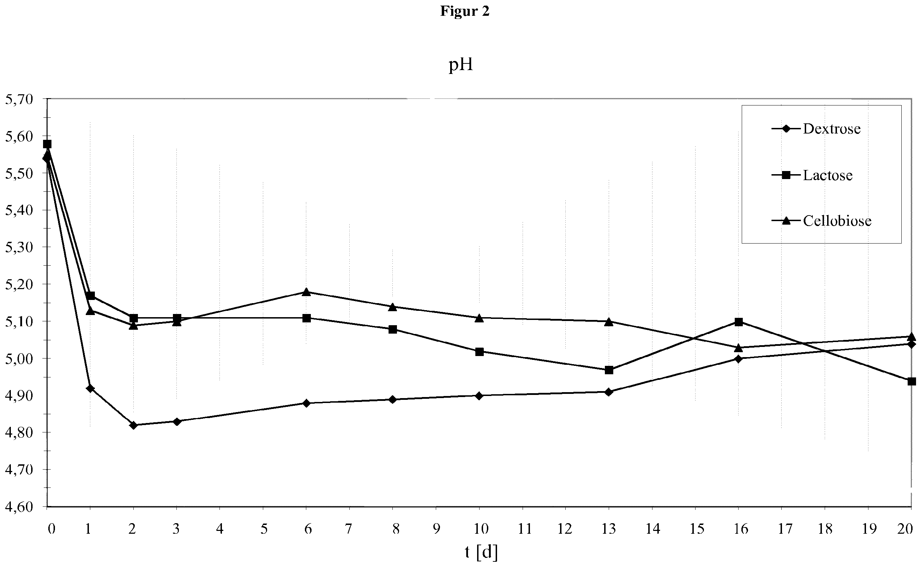

Figur 2 zeigt den pH Wert der Rohwurst vom Produktionstag über einen Zeitraum von 3 Wochen bei Zugabe der unterschiedlichen Kohlenhydrate (Reifeprozess). Bei Dextrose wurde bereits in den ersten beiden Tagen ein deutlicher Abfall des pH Wertes beobachtet, der um 3 Einheiten unter dem von Cellobiose oder Laktose lag. Im Verlauf des Reifeprozesses stieg der pH Wert der mit Dextrose versetzten Rohwurst bis aus die Größenordnung der mit Cellobiose oder Laktose versetzten Würste an. Der pH Wert der Rohwürste, die mit Cellobiose versetzt waren, verhielt sich im Reifeprozess innerhalb der zu erwartenden Schwankungsbreiten vergleichbar zu denen, die mit Laktose versetzt waren.

Außerdem wurde in Analogie Salami mit 3 verschiedenen Zuckern (Dextrose, Cellobiose, Lactose) hergestellt und fermentiert. Eine Zusammensetzung aus 20% SII frisch, 35% SII gefroren, 30% SV und 15% SVIII wurde gewogen und jeweils mit einer Mischung von 28g/kg NPS, 7g/kg diverse Mischungen und 0,5g/kg PRIMAL^{®} SK natur rapid vermengt und daraus Salami hergestellt. Das so erzeugte Produkt wurde gelagert ohne zu räuchern.

Essigsäure, Acetaldehyd, Methional, Phenylacetaldehyd, 2-Methoxyphenol, 2-Acetyl-1-pyrrolin, Buttersäure, 3-Methylbuttersäure, 3-Methylbutanal sowie 4-Methylphenol sind als *Key Aroma Compounds* der Salami literaturbekannt (K. Söllner and P. Schieberle, Decoding the Key Aroma Compounds of a Hungarian-Type Salami by Molecular Sensory Science Approaches, in: Journal of Agricultural and Food Chemistry, 2009, 57, 10, 4319-4327). Jeweils zwei mit Dextrose, Cellobiose und Lactose gereifte Salami-Würste wurden auf die Gehalte an aromaaktiven Substanzen untersucht. Dabei konnte Essigsäure in allen Salami-Wurstproben in Gehalten von 0,01-0,03 g/100g bestimmt werden. Dabei zeigten die in Gegenwart von Cellobiose gereiften Salamis die höchsten Gehalte (300 ppm) und damit auch die höchsten *Odor Activity Values* (2222), gefolgt von den mit Lactose (200 ppm, 1481) und Dextrose (100 ppm, 741) gereiften Mustern. Im Weiteren konnten von den o. g. Verbindungen 2-Methoxyphenol und 4-Methylphenol quantifiziert werden (Tabellen 1 und 2).

Die nachfolgende Tabelle zeigt die bestimmten Gehalte an *Key Aroma Compounds* in den untersuchten Salami-Mustern:

| | | Dextrose | | Cellobiose | | Lactose | |
|---|---|---|---|---|---|---|---|
| | | 1 | 2 | 1 | 2 | 1 | 2 |
| Essigsäure | [g/100g] | 0,01 | 0,01 | 0,03 | 0,03 | 0,02 | 0,02 |
| 1,3-Butandiol | [mg/kg] | < 5 | < 5 | < 5 | < 5 | < 5 | < 5 |
| 2,3-Butandiol | [mg/kg] | < 5 | < 5 | < 5 | < 5 | < 5 | < 5 |
| Ethylhexanoat | [mg/kg] | < 0,1 | < 0,1 | < 0,1 | < 0,1 | < 0,1 | < 0,1 |
| 2-Methoxyphenol | [mg/kg] | 0,30 | 0,29 | 0,26 | 0,13 | 0,24 | 0,25 |
| 4-Methylphenol | [mg/kg] | < 0,1 | < 0,1 | < 0,1 | 0,12 | 0,10 | 0,10 |
| Phenylacetaldehyd | [mg/kg] | < 10 | < 10 | < 10 | < 10 | < 10 | < 10 |
| Propylacetat | [mg/kg] | < 0,5 | < 0,5 | < 0,5 | < 0,5 | < 0,5 | < 0,5 |
| Acetaldehyd | [mg/kg] | < 5 | < 5 | < 5 | < 5 | < 5 | < 5 |
| 3-Methylbutanal | [mg/kg] | < 5 | < 5 | < 5 | < 5 | < 5 | < 5 |
| "<": Der angegebene Wert entspricht der Bestimmungsgrenze der angewendeten Analysenmethode | | | | | | | |

Die nachfolgende Tabelle zeigt die bestimmten Gehalte, Schwellenwertkonzentration und Aromaaktivitätswerte von Essigsäure in den untersuchten Salami-Mustern:

| | | Dextrose | | Cellobiose | | Lactose | |
|---|---|---|---|---|---|---|---|
| | | 1 | 2 | 1 | 2 | 1 | 2 |
| Essigsäure (siehe Tabelle oben) | [mg/kg] | 100 | 100 | 300 | 300 | 200 | 200 |
| *Odor Threshold* | [mg/kg] | 0,135 | 0,135 | 0,135 | 0,135 | 0,135 | 0,135 |
| OAV | | 741 | 741 | 2222 | 2222 | 1481 | 1481 |
| "Odor Threshold": Erkennungsschwellenwertkonzentration | | | | | | | |
| "OAV": *Odor Activity Value* (Quotient der Konzentration im Produkt und der Erkennungsschwellenwertkonzentration) | | | | | | | |

Dabei ist festzuhalten, dass die *Key Aroma Compounds* Essigsäure und 2-Methoxphenol in allen untersuchten Salami-Wurstproben bestimmbar waren. Mit *Odor Activity Values* (OAV) von jeweils > 1 waren diese Substanzen in allen Wurstproben human-sensorisch wahrnehmbar bzw. können einen Beitrag zum Aroma der vorliegenden Salamis prinzipiell leisten.

Die mit Cellobiose gereiften Salamis zeigten dabei die höchsten Gehalte an Essigsäure als *Key Aroma Compound* der Salami im Vergleich zu den mit Lactose und Dextrose gereiften Pendants.

Das Gewicht der Salami wurde über die Zeit bestimmt und die Messwerte sind in nachfolgender Tabelle zusammengefasst:

| Tag/% | Dextrose | Lactose | Cellobiose |
|---|---|---|---|
| 0 | 0,00 | 0,00 | 0,00 |
| 1 | -1,71 | -1,52 | -1,24 |
| 2 | -2,08 | -4,35 | -3,67 |
| 3 | -3,45 | -6,69 | -6,03 |
| 4 | -4,62 | -8,04 | -8,15 |
| 7 | -6,90 | -9,01 | -8,95 |
| 8 | -7,50 | -9,75 | -10,07 |
| 9 | -8,29 | -10,32 | -10,81 |
| 10 | -8,63 | -11,78 | -11,56 |
| 11 | -9,40 | -12,27 | -12,02 |
| 14 | -11,85 | -15,03 | -15,26 |
| 15 | -14,22 | -17,13 | -16,89 |
| 16 | -16,63 | -18,20 | -18,20 |
| 21 | -17,71 | -19,76 | -19,61 |
| 22 | -18,98 | -21,48 | -21,03 |
| 23 | -20,58 | -22,39 | -21,95 |
| 24 | -22,00 | -24,05 | -23,41 |
| 25 | -23,85 | -25,00 | -24,27 |

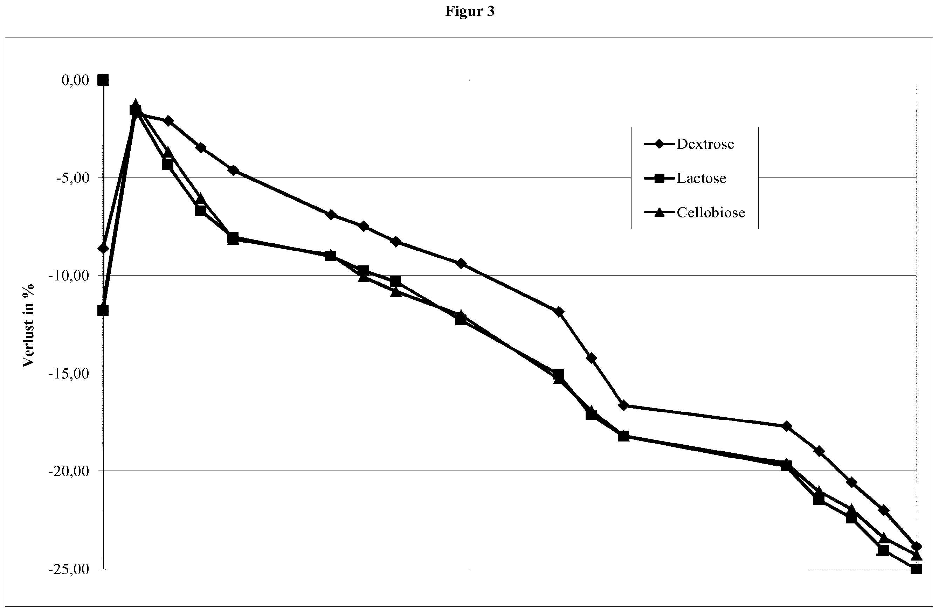

Figur 3 zeigt den Gewichtsverlust über die Lagerzeit.

Der pH Wert der Salami wurde ebenfalls über die Zeit bestimmt und die Messwerte sind in nachfolgender Tabelle zusammengefasst:

| Tag/pH | Dextrose | Lactose | Cellobiose |
|---|---|---|---|
| 0 | 5,54 | 5,53 | 5,55 |
| 1 | 5,23 | 5,29 | 5,30 |
| 2 | 4,86 | 5,08 | 5,04 |
| 3 | 4,80 | 5,02 | 5,00 |
| 4 | 4,75 | 4,95 | 5,00 |
| 7 | 4,81 | 4,93 | 5,08 |
| 8 | 4,79 | 4,92 | 5,06 |
| 9 | 4,82 | 4,95 | 5,08 |
| 10 | 4,82 | 4,82 | 5,07 |
| 11 | 4,83 | 4,84 | 5,09 |
| 14 | 4,87 | 4,85 | 5,12 |
| 15 | 4,87 | 4,88 | 5,10 |
| 16 | 4,92 | 4,90 | 5,09 |
| 21 | 4,90 | 4,99 | 5,15 |
| 22 | 4,93 | 4,98 | 5,14 |
| 23 | 4,92 | 5,02 | 5,17 |
| 24 | 4,95 | 5,06 | 5,17 |
| 25 | 4,96 | 5,05 | 5,17 |

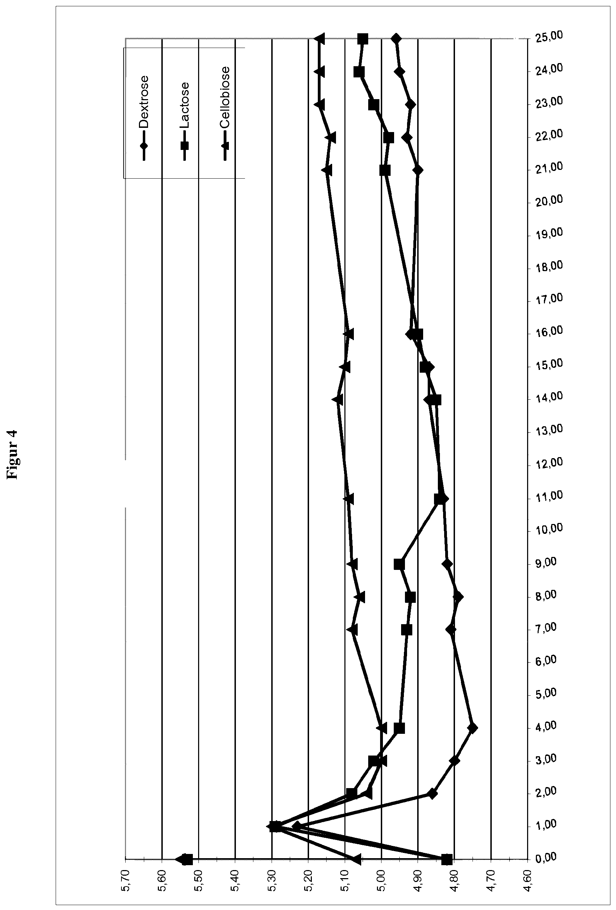

Figur 4 zeigt den pH-Wertverlauf über die Lagerzeit.

### Beispiel 3 - Bratwurst (nicht erfindungsgemäß)

### Rezeptur

### Fleischarten:

| Fleischart | | Anteil |
|---|---|---|
| Für das | Grundbrät (10 kg) | |
| | SIII (3 kg) | 15% |
| | Backen (4 kg) | 20% |
| | Eis (3 kg) | 15% |
| Für die | Einlage (10 kg) | |
| | S IV Bauch mager 4 mm | 50% |

### Gütezusätze und Gewürze pro kg :

| Bezeichnung | 3-1 (Vergleich) | 3-2 (Vergleich) | 3-3 (Vergleich) | 3-4 (erfindungsgemäß) |
|---|---|---|---|---|
| Kochsalz | 20 g | 20 g | 20 g | 20 g |
| Plastal P | 2,5 g | 2,5 g | 2,5 g | 2,5 g |
| Bratwurst excellent | 5 g | 5 g | 5 g | 5 g |
| Majoran Thüringer | 2 g | 2 g | 2 g | 2 g |
| Rosipur- Dextrose | 5 g¹ | - | - | - |
| Laktose | - | 5 g¹ | - | - |
| SM Bräunungs Compound | - | - | 5 g¹ | - |
| Cellobiose | - | - | - | 5 g¹ |
| ¹pro kg Brät | | | | |

Versuchsdurchführung: Das Grundbrät wurde hergestellt und im Verhältnis 50/50 mit der Einlage vermischt, ggf. 1 bis 2 Runden eingeschnitten. Das so erhaltene Grundbrät wurde in 4 gleiche Teile aufgeteilt. Die Menge Zuckerstoff wurde in 100 g Eiswasser aufgelöst und unter das Brät gemischt. Das Brät wurde in Schweinedärme Kaliber 26/28 gefüllt und bei 75 °C auf eine Kerntemperatur von 70°C gebrüht.

Ergebnisse: Es wurde beobachtet, dass die Bräunung der Würste mit Laktose (3-2) stärker ist, als die der Dextrose (3-1). Überraschender Weise ist die Bräunung der erfindungsgemäß mit Cellobiose (3-4) behandelten Würste mindestens genauso stark ausgeprägt, wie die der mit Laktose (3-2) oder mit Bräunungszusatz (3-3) behandelten Variante.

### Beispiel 4 - Fleischkäse (nicht erfindungsgemäß)

### Rezeptur:

### Fleischarten:

| Fleischart Für das Grundbrät (10 kg) | Anteil |
|---|---|
| SIII | 45% |
| Backen | 20% |
| Speck | 15% |
| Eis | 20% |

### Gütezusätze und Gewürze pro kg Masse:

| Bezeichnung | 4-1 (Vergleich) | 4-2 (Vergleich) | 4-3 (Vergleich) | 4-4 (erfindungsgemäß) |
|---|---|---|---|---|
| Nitritpökelsalz | 20 g | 20 g | 20 g | 20 g |
| Plastal P | 2,5 g | 2,5 g | 2,5 g | 2,5 g |
| Grundbrätwürzung | 5 g | 5 g | 5 g | 5 g |
| Ascorbat | 0,5 g | 0,5 g | 0,5 g | 0,5 g |
| Rosipur Dextrose | 5,0 g² | - | - | - |
| Laktose | - | 5,0 g² | - | - |
| SM Bräunungs Compound | - | - | 5,0 g² | - |
| Cellobiose | - | - | - | 5,0 g2 |
| ²pro kg Brät | | | | |

Versuchsdurchführung: Es wurden 40 kg Grundbrät hergestellt. Das Grundbrät wurde in 4 gleiche Teile aufgeteilt. Die entsprechende Menge Zuckerstoffe wurde in 200 g Eiswasser aufgelöst und untergemischt. Einen Teil des Bräts (5 kg) wurde in Saitlinge Kaliber 22/24 gefüllt. Der Rest (5 kg) wurde in Fleischkäseformen gefüllt. Die Wiener wurden in herkömmlicher Weise weiterbehandelt. Der Fleischkäse wurde bei 120 °C auf eine Kerntemperatur von 70 °C gebacken.

Ergebnis: Die Ergebnisse der Versuche zu den mit den Kohlenhydraten Dextrose, Laktose, "Bräunungszusatz" und Cellobiose hergestellten und zubereiteten Fleischkäse waren mit den Bräunungsversuchen zur Bratwurst vergleichbar. Es wurde beobachtet, dass die Bräunung der Fleischkäse mit Laktose (4-2) stärker war als die mit Dextrose (4-1) und mit Fruktose (4-3, Bräunungscompound). Überraschender Weise ist die Bräunung der erfindungsgemäß Cellobiose (4-4) enthaltenden Fleischkäse mindestens genauso stark ausgeprägt, wie die Laktose (4-2) oder Bräunungszusatz (4-3) enthaltende Variante.

### Beispiel 5 - Wiener (nicht erfindungsgemäß)

### Rezeptur

### Fleischarten:

| Fleischart | Anteil |
|---|---|
| SIII | 25% |
| RIII | 20% |
| Eis | 25% |
| Speck | 20% |
| Backen | 10% |

### Gütezusätze und Gewürze pro kg:

| Bezeichnung | 5-1 (Vergleich) | 5-2 (erfindungsgemäß) |
|---|---|---|
| Nitritpökelsalz | 18 g | 18 g |
| Würzung (wird gestellt) | 5 g | 5 g |
| Laktose | 4 g | - |
| Cellobiose | - | 4 g |

Versuchsdurchführung: Grundbrätverfahren, Kaliber 22/24 ca. 60-70g schwer. Das Räuchern erfolgte, bis eine schöne Räucherfarbe erreicht war.

Ergebnis: Die gewünschte Rauchfarbe der Wiener war Ziel dieses Versuchs. Dies konnte unterstützt werden, indem eine Maillardreaktion zwischen den Proteinen der Wursthülle (Schaafsaitling) und dem Kohlenhydrat stattfindet. Im Versuch konnte gezeigt werden, dass die Bräunungsreaktionen zwischen Laktose und Cellobiose vergleichbar verlief. Somit war hier ein Vorteil im Rauchverfahren zu sehen, da der Praxisanwender hier eine zeitliche Verkürzung hat.

Sensorik von Wiener und Fleischkäse: Es konnten die Ergebnisse aus dem Bräunungsversuch (Bratwurst) bestätigt werden. Der Fleischkäse bräunte gleichmäßig im Backofen. Hierbei war die Bräunung bei Cellobiose mit der bei Laktose zu vergleichen. Wiener sind sehr vergleichbar in der Bräunung. Im Geruch und Geschmack sind beide Kohlenhydrate miteinander zu vergleichen.

### Beispiel 6 - Fermentation von Cellobiose/Laktose mit unterschiedlichen Bakterienstämmen:

Beispiel 6 betrifft einen Vergleich zwischen der Fermentation von Cellobiose und Laktose bei verschiedenen Bakterienstämmen, der in praktischen Versuchen durchgeführt wurde. Die Ergebnisse sind in nachfolgender Tabelle wiedergegeben:

| Stamm | Cellobiose | | Laktose | |
|---|---|---|---|---|
| | Versuche | Literatur | Versuche | Literatur |
| *Lactobacillus sakei* | ja | ja | nein/ja | ja |
| *Lactobacillus plantarum* | ja | ja | ja | ja |
| *Lactococcus lactis* | ja | n.b. *Bildet Antibiotikum Nisin* | ja | ja |
| *Staphylococcus carnosus* | ja | Keine Säurebildung | ja | stammabhängig |
| *Staphylococcus xylosus* | ja | Keine Säurebildung | ja | stammabhängig |

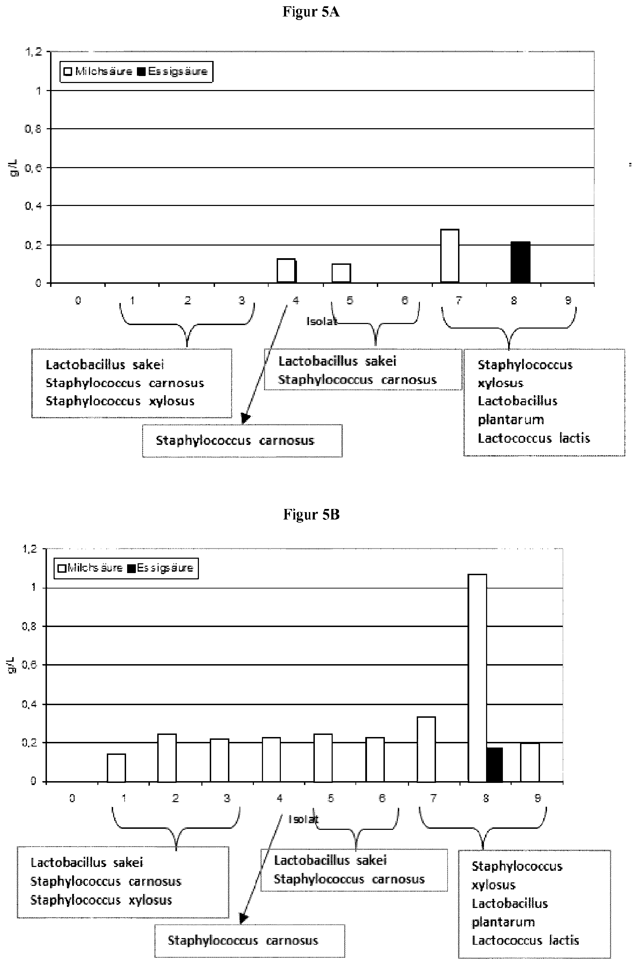

In Figur 5 ist der Einfluss von Cellobiose auf das Säurespektrum gezeigt, das von einzelnen Bakterienstämmen oder Kombinationen von Bakterienstämmen, im einzelnen *Lactobacillus sakei, Lactobacillus plantarum, Lactococcus lactis, Staphylococcus carnosus* und *Staphylococcus xylosus,* nach fünftägiger Verwertung von Laktose (Figur 5A) oder Cellobiose (Figur 5B) gebildet wurde. Dabei ist die Menge an Milch- und Essigsäure gezeigt, die aus insgesamt 10 verschiedenen Ansätzen isoliert werden konnte. Die Isolate 1, 2 und 3 stammten aus Proben mit *Lactobacillus sakei, Staphylococcus carnosus* und *Staphylococcus xylosus,* Isolat 4 stammte aus einer Probe mit *Staphylococcus carnosus,* Isolate 5 und 6 aus Proben mit *Lactobacillus sakei* und *Staphylococcus carnosus* und Isolate 7, 8 und 9 von Proben mit *Staphylococcus xylosus, Lactobacillus plantarum* und *Lactococcus lactis.* Isolat 0 stammte aus einer Probe ohne Bakterienstamm. Die Ergebnisse zeigen, dass alle Bakterienstämme bei der Verwertung von Cellobiose mehr Milchsäure bildeten als bei der Verwertung von Laktose. Während bei der Verwertung von Cellobiose alle untersuchten Kombinationen von Bakterienstämmen Milchsäure bildeten, wurde bei der Verwertung von Laktose nur in den Isolaten 4, 5 und 7 Milchsäure gefunden. Hingegen ist die Bildung von Essigsäure, die bei der Verwertung sowohl von Laktose als auch von Cellobiose nur in Isolat 8 zu erkennen war, bei der Verwertung von Cellobiose geringer als bei der Verwertung von Laktose.

## Patentansprüche

1. Lebensmittelzubereitung umfassend Teile von geschlachteten oder erlegten warmblütigen Tieren, welche zum Verzehr durch den Menschen bestimmt sind, und Cellobiose; wobei die Lebensmittelzubereitung fermentiert oder vorfermentiert wurde durch Mikroorganismen, welche Cellobiose verstoffwechseln, und wobei die Lebensmittelzubereitung weder Cellotriose, noch Cellotetraose, noch Cellopentaose, noch Cellohexaose enthält; wobei der Gehalt an Fett mindestens 5,0 Gew.-% beträgt, bezogen auf das Gesamtgewicht der Lebensmittelzubereitung; wobei die Fermentation durch einen Mikroorganismus erfolgt ausgewählt aus
- Bakterien ausgewählt aus der Gruppe bestehend aus *Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae, Pediococcus pentosaceus, Kocuria varians, Staphylococcus carnosus, Staphylococcus xylosus, Staphylococcus equorum, Staphylococcus succinus,* und *Staphylococcus saprophyticus*;
- Hefen ausgewählt aus der Gruppe bestehend aus *Debaryomyces hansenii, Candida utilis,* und *Candida zeylanoides;* und
- Schimmelpilzen ausgewählt aus der Gruppe bestehend *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantiogriseum, Penicillium commune,* und *Penicillium rubrum.*

2. Die Lebensmittelzubereitung nach Anspruch 1, wobei die Teile von geschlachteten oder erlegten warmblütigen Tieren ausgewählt sind aus der Gruppe bestehend aus Fleisch, Innereien und Speck.

3. Die Lebensmittelzubereitung nach einem der vorstehenden Ansprüche, welche keine Laktose enthält oder wobei der Gehalt an Laktose höchstens 1,0 Gew.-% beträgt, bezogen auf das Gesamtgewicht der Lebensmittelzubereitung.

4. Ein Verfahren zur Herstellung einer Lebensmittelzubereitung nach einem der Ansprüche 1 bis 3, umfassend die Schritte
(a) Mischen von Teilen von geschlachteten oder erlegten warmblütigen Tieren, welche zum Verzehr durch den Menschen bestimmt sind, und einer Zusammensetzung, welche Cellobiose enthält; und
(b) Reifen der gemäß Schritt (a) hergestellten Mischung durch Fermentation mit Mikroorganismen, welche Cellobiose verstoffwechseln; wobei die Mikroorganismen ausgewählt sind aus
- Bakterien ausgewählt aus der Gruppe bestehend aus *Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae, Pediococcus pentosaceus, Kocuria varians, Staphylococcus carnosus, Staphylococcus xylosus, Staphylococcus equorum, Staphylococcus succinus,* und *Staphylococcus saprophyticus;*
- Hefen ausgewählt aus der Gruppe bestehend aus *Debaryomyces hansenii, Candida utilis,* und *Candida zeylanoides;* und
- Schimmelpilzen ausgewählt aus der Gruppe bestehend *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantiogriseum, Penicillium commune,* und *Penicillium rubrum.*

5. Das Verfahren nach Anspruch 4, wobei die Zusammensetzung, welche Cellobiose enthält, eine Gewürzmischung und/oder eine Fermentationsmischung ist.

6. Verwendung von Cellobiose als Zutat in Lebensmittelzubereitungen umfassend Teile von geschlachteten oder erlegten warmblütigen Tieren, welche zum Verzehr durch den Menschen bestimmt sind, wobei der Gehalt an Fett mindestens 5,0 Gew.-% beträgt, bezogen auf das Gesamtgewicht der Lebensmittelzubereitung, und wobei Cellobiose zur Verbesserung des Reifeprozesses und/oder der Aromabildung durch Mikroorganismen fermentiert wird; wobei die Mikroorganismen ausgewählt sind aus
- Bakterien ausgewählt aus der Gruppe bestehend aus *Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae, Pediococcus pentosaceus, Kocuria varians, Staphylococcus carnosus, Staphylococcus xylosus, Staphylococcus equorum, Staphylococcus succinus,* und *Staphylococcus saprophyticus*;
- Hefen ausgewählt aus der Gruppe bestehend aus *Debaryomyces hansenii, Candida utilis,* und *Candida zeylanoides;* und
- Schimmelpilzen ausgewählt aus der Gruppe bestehend *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantiogriseum, Penicillium commune,* und *Penicillium rubrum.*

7. Die Verwendung nach Anspruch 6, wobei die Cellobiose in einer Gewürzmischung und/oder Fermentationsmischung enthalten ist.

## Claims

1. Food preparation comprising parts of slaughtered or hunted warm-blooded animals intended for human consumption and cellobiose; wherein the food preparation has been fermented or prefermented by microorganisms that metabolize cellobiose, and wherein the food preparation contains neither cellotriose, nor cellotetraose, nor cellopentaose, nor cellohexaose; wherein the fat content is at least 5.0% by weight, based on the total weight of the food preparation; wherein the fermentation is carried out by a microorganism selected from
- bacteria selected from the group consisting of *Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae, Pediococcus pentosaceus, Kocuria varians, Staphylococcus carnosus, Staphylococcus xylosus, Staphylococcus equorum, Staphylococcus succinus,* and *Staphylococcus saprophyticus;*
- yeasts selected from the group consisting of *Debaryomyces hansenii, Candida utilis,* and *Candida zeylanoides;* and
- molds selected from the group consisting of *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantiogriseum, Penicillium commune,* and *Penicillium rubrum.*

2. The food preparation according to claim 1, wherein the parts of slaughtered or hunted warm-blooded animals are selected from the group consisting of meat, offal, and bacon.

3. The food preparation according to one of the preceding claims, which does not contain lactose or in which the lactose content is at most 1.0% by weight, based on the total weight of the food preparation.

4. A method for producing a food preparation according to any one of claims 1 to 3, comprising the steps of
(a) mixing parts of slaughtered or hunted warm-blooded animals intended for human consumption and a composition containing cellobiose; and
(b) maturing the mixture produced in step (a) by fermentation with microorganisms that metabolize cellobiose; wherein the microorganisms are selected from
- bacteria selected from the group consisting of *Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae, Pediococcus pentosaceus, Kocuria varians, Staphylococcus carnosus, Staphylococcus xylosus, Staphylococcus equorum, Staphylococcus succinus, and Staphylococcus saprophyticus;*
- yeasts selected from the group consisting of *Debaryomyces hansenii, Candida utilis,* and *Candida zeylanoides;* and
- molds selected from the group consisting of *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantiogriseum, Penicillium commune, and Penicillium rubrum.*

5. The method according to claim 4, wherein the composition containing cellobiose is a spice mixture and/or a fermentation mixture.

6. Use of cellobiose as an ingredient in food preparations comprising parts of slaughtered or hunted warm-blooded animals intended for human consumption, wherein the fat content is at least 5.0% by weight based on the total weight of the food preparation, and wherein cellobiose is fermented to improve the ripening process and/or flavor formation by microorganisms; wherein the microorganisms are selected from
- bacteria selected from the group consisting of *Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae, Pediococcus pentosaceus, Kocuria varians, Staphylococcus carnosus, Staphylococcus xylosus, Staphylococcus equorum, Staphylococcus succinus,* and *Staphylococcus saprophyticus;*
- yeasts selected from the group consisting of *Debaryomyces hansenii, Candida utilis,* and *Candida zeylanoides;* and
- molds selected from the group consisting of *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantiogriseum, Penicillium commune,* and *Penicillium rubrum.*

7. The use according to claim 6, wherein the cellobiose is contained in a spice mixture and/or fermentation mixture.

## Revendications

1. Préparation alimentaire comprenant des parties d'animaux à sang chaud abattus ou chassés, destinés à la consommation humaine, et du cellobiose; la préparation alimentaire ayant été fermentée ou préfermentée par des micro-organismes qui métabolisent le cellobiose, et la préparation alimentaire ne contenant ni cellotriose, ni cellotétraose, ni cellopentaose, ni cellohexaose; la teneur en matières grasses étant d'au moins 5,0 % en poids par rapport au poids total de la préparation alimentaire; la fermentation étant effectuée par un micro-organisme choisi parmi
- des bactéries choisies dans le groupe constitué par *Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae, Pediococcus pentosaceus, Kocuria varians, Staphylococcus carnosus, Staphylococcus xylosus, Staphylococcus equorum, Staphylococcus succinus* et *Staphylococcus saprophyticus;*
- levures choisies dans le groupe constitué par *Debaryomyces hansenii, Candida utilis* et *Candida zeylanoides;* et
- des moisissures choisies dans le groupe constitué de *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantiogriseum, Penicillium commune* et *Penicillium rubrum.*

2. Préparation alimentaire selon la revendication 1, dans laquelle les parties d'animaux à sang chaud abattus ou chassés sont choisies dans le groupe constitué par la viande, les abats et le lard.

3. Préparation alimentaire selon l'une des revendications précédentes, qui ne contient pas de lactose ou dont la teneur en lactose est inférieure ou égale à 1,0 % en poids par rapport au poids total de la préparation alimentaire.

4. Procédé de fabrication d'une préparation alimentaire selon l'une des revendications 1 à 3, comprenant les étapes suivantes
(a) mélanger des parties d'animaux à sang chaud abattus ou chassés, destinés à la consommation humaine, et une composition contenant du cellobiose; et
(b) la maturation du mélange préparé selon l'étape (a) par fermentation avec des micro-organismes qui métabolisent le cellobiose ; les micro-organismes étant choisis parmi
- des bactéries choisies dans le groupe constitué par *Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae, Pediococcus pentosaceus, Kocuria varians, Staphylococcus carnosus, Staphylococcus xylosus, Staphylococcus equorum, Staphylococcus succinus* et *Staphylococcus saprophyticus;*
- levures choisies dans le groupe constitué par *Debaryomyces hansenii, Candida utilis,* et *Candida zeylanoides;* et
- des moisissures choisies dans le groupe constitué de *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantiogriseum, Penicillium commune* et *Penicillium rubrum.*

5. Procédé selon la revendication 4, dans lequel la composition contenant du cellobiose est un mélange d'épices et/ou un mélange de fermentation.

6. Utilisation de la cellobiose comme ingrédient dans des préparations alimentaires comprenant des parties d'animaux à sang chaud abattus ou chassés, destinées à la consommation humaine, la teneur en graisse étant d'au moins 5,0 % en poids par rapport au poids total de la préparation alimentaire, et la cellobiose étant fermentée pour améliorer le processus de maturation et/ou la formation d'arômes par des micro-organismes; les micro-organismes étant choisis parmi
- des bactéries choisies dans le groupe constitué par *Lactobacillus sakei, Lactobacillus plantarum, Lactobacillus curvatis, Lactobacillus curvatus, Lactobacillus bavaricus, Lactobacillus rhamnosus, Lactobacillus pentosus, Lactococcus lactis, Pediococcus acidilactici, Pediococcus pendosaccus, Pediococcus cerevisiae, Pediococcus pentosaceus, Kocuria varians, Staphylococcus carnosus, Staphylococcus xylosus, Staphylococcus equorum, Staphylococcus succinus* et *Staphylococcus saprophyticus;*
- levures choisies dans le groupe constitué par *Debaryomyces hansenii, Candida utilis* et *Candida zeylanoides;* et
- des moisissures choisies dans le groupe constitué par *Penicillium chrysogenum, Penicillium nordicum, Penicillium olsonii, Penicillium polonicum, Penicillium expansum, Penicillium nalgiovense, Penicillium paneum, Penicillium camemberti, Penicillium carneum, Penicillium solitum, Penicillium aurantiogriseum, Penicillium commune* et *Penicillium rubrum.*

7. Utilisation selon la revendication 6, dans laquelle le cellobiose est contenu dans un mélange d'épices et/ou un mélange de fermentation.
